# EUROPEAN PATENT APPLICATION

(11) **EP 4 668 400 A1**
(43) Date of publication of application: **24.12.2025**
(21) Application number: 23932526.9
(22) Date of filing: 14.04.2023
(51) Int. Cl.: H01M 10/0564, H01M 10/0569

(54) **ELECTROLYTE, BATTERY CELL, BATTERY AND ELECTRICAL APPARATUS**

(71) Applicant: Contemporary Amperex Technology Co., Limited, Ningde, Fujian 352100 (CN)
(72) Inventor: WANG, Hansen, Ningde, Fujian 352100 (CN); LIU, Chengyong, Ningde, Fujian 352100 (CN); WAN, Pan, Ningde, Fujian 352100 (CN); WANG, Yuchun, Ningde, Fujian 352100 (CN); ZHANG, Rupeng, Ningde, Fujian 352100 (CN); HUANG, Shengyuan, Ningde, Fujian 352100 (CN)
(74) Representative: Kraus & Lederer PartGmbB
(86) International application number: PCT/CN2023/088525
(87) International publication number: WO 2024/212245

(57) **Abstract**

This application provides an electrolyte solution, a battery cell, a battery, and a power consuming apparatus. The electrolyte solution includes a solvent. The solvent includes a first solvent. The first solvent is an organosiloxane compound. The content of the first solvent is greater than or equal to 20% of the total weight of the solvent.

## Description

### TECHNICAL FIELD

This application relates to an electrolyte solution, a battery cell, a battery, and a power consuming apparatus.

### BACKGROUND

In recent years, batteries have been widely used in energy storage power supply systems such as water power stations, thermal power stations, wind power stations, and solar power stations, and in a plurality of fields such as electric tools, electric bicycles, electric motorcycles, electric vehicles, military equipment, and aerospace. With the application and proliferation of batteries, the energy density of conventional batteries with carbon-based negative electrodes has fallen short of the requirements, necessitating battery systems with higher energy density. Batteries employing lithium metal and similar materials as negative electrodes offer high energy density but suffer from shorter cycle life. The foregoing statement is merely intended to provide background information related to this application, and does not necessarily constitute the prior art.

### SUMMARY

This application provides an electrolyte solution, a battery cell, a battery, and a power consuming apparatus, which can enhance the cycle performance of the battery.

A first aspect of this application provides an electrolyte solution, including a solvent. The solvent includes a first solvent. The first solvent is an organosiloxane compound. The content of the first solvent is greater than or equal to 20% of the total weight of the solvent.

The inventors find during research that when the organosiloxane compound is used as a main solvent (with the content greater than or equal to 20% of the total weight of the solvent) of the electrolyte solution, the oxidation resistance of the electrolyte solution can be enhanced and the oxidative decomposition of the electrolyte solution can be reduced, thereby enhancing the cycling stability of the battery and extending the cycle life of the battery.

In any embodiment, the first solvent includes one or more of organosiloxane compounds represented by Formula (I),

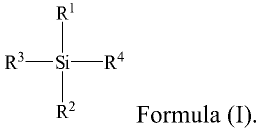

R¹, R², R³, and R⁴ each independently include one of hydrogen atoms, C1-C10 alkyl groups, C1-C10 alkoxy groups, C2-C10 alkoxyalkyl groups, and groups represented by Formula (a), and at least one of R¹, R², R³, and R⁴ includes one of C1-C10 alkoxy groups and the groups represented by Formula (a),

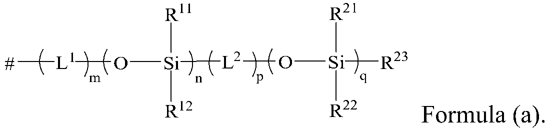

# represents an attachment point, L¹ and L² each independently represent one of C1-C10 alkylene groups, C1-C10 alkyleneoxy groups, and C2-C10 alkyleneoxyalkylene groups, R¹¹, R¹², R²¹, R²², and R²³ each independently include one of hydrogen atoms, C1-C10 alkyl groups, C1-C10 alkoxy groups, and C2-C10 alkoxyalkyl groups, m and p each independently represent 0 or 1, n and q each independently represent 0 or an integer from 1 to 5, and n and q are not both 0.

When the first solvent is the organosiloxane compounds represented by Formula (I), the oxidation resistance of the electrolyte solution can be enhanced and the oxidative decomposition of the electrolyte solution can be reduced, thereby further stabilizing a negative electrode and reducing the reductive decomposition of the electrolyte solution, so that the battery can exhibit high cycling stability and long cycle life in a wider voltage range.

In any embodiment, R¹, R², R³, and R⁴ each independently include one of C1-C5 alkyl groups, C1-C5 alkoxy groups, C2-C5 alkoxyalkyl groups, and the groups represented by Formula (a). In this way, the steric hindrance of the first solvent can be reduced, thereby enhancing the solubility of the first solvent for electrolyte salts and enhancing the miscibility of the first solvent with other solvents, so that the battery can exhibit high cycling stability and long cycle life.

In any embodiment, two of R¹, R², R³, and R⁴ each independently include one of C1-C10 alkoxy groups and the groups represented by Formula (a).

In any embodiment, two of R¹, R², R³, and R⁴ each independently include one of C1-C5 alkoxy groups and the groups represented by Formula (a).

In this way, the steric hindrance of the first solvent can be reduced, thereby enhancing the solubility of the first solvent for electrolyte salts and enhancing the miscibility of the first solvent with other solvents, so that the battery can exhibit high cycling stability and long cycle life.

In any embodiment, L¹ and L² each independently represent one of C1-C5 alkylene groups, C1-C5 alkyleneoxy groups, and C2-C5 alkyleneoxyalkylene groups. When two silicon atoms are bridged via linking groups L¹ and L², the shielding effect of the silicon atoms on the lone-pair electrons of oxygen atoms can be mitigated to some extent, and the chelation of the linking groups L¹ and L² and terminal oxygen atoms with cations in the electrolyte solution can be further facilitated to form a solvation structure, so that the first solvent can exhibit better solubility for electrolyte salts and the first solvent can further exhibit better miscibility with other solvents. In this way, the electrolyte solution can exhibit suitable ionic conductivity, thereby enhancing the cycle performance of the battery.

In any embodiment, L¹ and L² each independently represent one of C2-C3 alkyleneoxy groups. L¹ and L² fall within the foregoing ranges, the chelation of the first solvent with cations in the electrolyte solution can be further facilitated to form a solvation structure, so that the first solvent can exhibit better solubility for electrolyte salts and the first solvent can further exhibit better miscibility with other solvents. In this way, the electrolyte solution can exhibit suitable ionic conductivity, thereby further enhancing the cycle performance of the battery.

In any embodiment, R¹¹, R¹², R²¹, R²², and R²³ each independently include one of C1-C5 alkyl groups, C1-C5 alkoxy groups, and C2-C5 alkoxyalkyl groups.

In any embodiment, R¹¹, R¹², R²¹, and R²² are each independently C1-C5 alkyl groups, and R²³ includes one of C1-C5 alkyl groups, C1-C5 alkoxy groups, and C2-C5 alkoxyalkyl groups.

In any embodiment, m and p are not both 0.

In any embodiment, n and q each independently represent 0, 1, or 2, and n and q are not both 0.

In any embodiment, m, n, and p are all 0, and q is an integer from 1 to 5.

In any embodiment, m and n are both 0, p is 1, and q is an integer from 1 to 5.

In any embodiment, m is 0, n is an integer from 1 to 5, p is 1, and q is an integer from 1 to 5.

In any embodiment, m is 1, n is an integer from 1 to 5, p is 1, and q is an integer from 1 to 5.

In any embodiment, m, n, and p are all 0, q is 1 or 2, R²¹, R²², and R²³ each independently include one of C1-C10 alkyl groups, C1-C10 alkoxy groups, and C2-C10 alkoxyalkyl groups.

In any embodiment, m, n, and p are all 0, q is 1 or 2, R²¹, R²², and R²³ each independently include one of C1-C5 alkyl groups, C1-C5 alkoxy groups, and C2-C5 alkoxyalkyl groups.

In any embodiment, m, n, and p are all 0, q is 1 or 2, R²¹ and R²² are each independently C1-C5 alkyl groups, R²³ is C1-C5 alkyl groups, C1-C5 alkoxy groups, and C2-C5 alkoxyalkyl groups.

In any embodiment, m and n are both 0, p is 1, q is 1 or 2, L² represents one of C1-C10 alkylene groups, C1-C10 alkyleneoxy groups, and C2-C10 alkyleneoxyalkylene groups, and R²¹, R²², and R²³ each independently include one of C1-C10 alkyl groups, C1-C10 alkoxy groups, and C2-C10 alkoxyalkyl groups.

In any embodiment, m and n are both 0, p is 1, q is 1 or 2, L² represents one of C1-C5 alkylene groups, C1-C5 alkyleneoxy groups, and C2-C5 alkyleneoxyalkylene groups, and R²¹, R²², and R²³ each independently include one of C1-C5 alkyl groups, C1-C5 alkoxy groups, and C2-C5 alkoxyalkyl groups.

In any embodiment, m and n are both 0, p is 1, q is 1 or 2, L² represents one of C1-C5 alkylene groups, C1-C5 alkyleneoxy groups, and C2-C5 alkyleneoxyalkylene groups, R²¹ and R²² are each independently C1-C5 alkyl groups, and R²³ includes one of C1-C5 alkyl groups, C1-C5 alkoxy groups, and C2-C5 alkoxyalkyl groups.

In any embodiment, m and n are both 0, p is 1, q is 1 or 2, L² represents C2-C3 alkyleneoxy groups, R²¹ and R²² are each independently C1-C5 alkyl groups, and R²³ includes one of C1-C5 alkyl groups, C1-C5 alkoxy groups, and C2-C5 alkoxyalkyl groups.

In any embodiment, m is 0, n is 1 or 2, p is 1, q is 1 or 2, L² represents one of C1-C10 alkylene groups, C1-C10 alkyleneoxy groups, and C2-C10 alkyleneoxyalkylene groups, and R¹¹, R¹², R²¹, R²², and R²³ each independently include one of C1-C10 alkyl groups, C1-C10 alkoxy groups, and C2-C10 alkoxyalkyl groups.

In any embodiment, m is 0, n is 1 or 2, p is 1, q is 1 or 2, L² represents one of C1-C5 alkylene groups, C1-C5 alkyleneoxy groups, and C2-C5 alkyleneoxyalkylene groups, and R¹¹, R¹², R²¹, R²², and R²³ each independently include one of C1-C5 alkyl groups, C1-C5 alkoxy groups, and C2-C5 alkoxyalkyl groups.

In any embodiment, m is 0, n is 1 or 2, p is 1, q is 1 or 2, L² represents one of C1-C5 alkylene groups, C1-C5 alkyleneoxy groups, and C2-C5 alkyleneoxyalkylene groups, R¹¹, R¹², R²¹, and R²² are each independently C1-C5 alkyl groups, and R²³ includes one of C1-C5 alkyl groups, C1-C5 alkoxy groups, and C2-C5 alkoxyalkyl groups.

In any embodiment, m is 0, n is 1 or 2, p is 1, q is 1 or 2, L² represents C2-C3 alkyleneoxy groups, R¹¹, R¹², R²¹, and R²² are each independently C1-C5 alkyl groups, and R²³ includes one of C1-C5 alkyl groups, C1-C5 alkoxy groups, and C2-C5 alkoxyalkyl groups.

In any embodiment, m is 1, n is 1 or 2, p is 1, q is 1 or 2, L¹ and L² each independently represent one of C1-C10 alkylene groups, C1-C10 alkyleneoxy groups, and C2-C10 alkyleneoxyalkylene groups, and R¹¹, R¹², R²¹, R²², and R²³ each independently include one of C1-C10 alkyl groups, C1-C10 alkoxy groups, and C2-C10 alkoxyalkyl groups.

In any embodiment, m is 1, n is 1 or 2, p is 1, q is 1 or 2, L¹ and L² each independently represent one of C1-C5 alkylene groups, C1-C5 alkyleneoxy groups, and C2-C5 alkyleneoxyalkylene groups, and R¹¹, R¹², R²¹, R²², and R²³ each independently include one of C1-C5 alkyl groups, C1-C5 alkoxy groups, and C2-C5 alkoxyalkyl groups.

In any embodiment, m is 1, n is 1 or 2, p is 1, q is 1 or 2, L¹ and L² each independently represent one of C1-C5 alkylene groups, C1-C5 alkyleneoxy groups, and C2-C5 alkyleneoxyalkylene groups, and R¹¹, R¹², R²¹, and R²² are each independently C1-C5 alkyl groups, and R²³ includes one of C1-C5 alkyl groups, C1-C5 alkoxy groups, and C2-C5 alkoxyalkyl groups.

In any embodiment, m is 1, n is 1 or 2, p is 1, q is 1 or 2, L¹ and L² each independently represent C2-C3 alkyleneoxy groups, R¹¹, R¹², R²¹, and R²² are each independently C1-C5 alkyl groups, and R²³ includes one of C1-C5 alkyl groups, C1-C5 alkoxy groups, and C2-C5 alkoxyalkyl groups.

In any embodiment, a quantity of silicon atoms in the first solvent is denoted as x, a quantity of oxygen atoms in the first solvent is denoted as y, 0.5 ≤ y/x ≤ 4, and optionally, 1 ≤ y/x ≤ 2. The further adjustment of a ratio of a quantity of oxygen atoms to a quantity of silicon atoms in the molecular structure of the organosiloxane compound can enable the first solvent to exhibit better solubility for electrolyte salts and can further enable the first solvent to exhibit better miscibility with other solvents.

In any embodiment, a quantity of silicon atoms in the first solvent is denoted as x, 1 ≤ x ≤ 10, optionally, 1 ≤ x ≤ 5, and further optionally, 1 ≤ x ≤ 3. When the quantity of silicon atoms in the first solvent falls within the foregoing range, the electrolyte solution can exhibit better ionic conductivity.

In any embodiment, a quantity of oxygen atoms in the first solvent is denoted as y, 1 ≤ y ≤ 20, optionally, 1 ≤ y ≤ 10, and further optionally, 1 ≤ y ≤ 6. When the quantity of oxygen atoms in the first solvent falls within the foregoing range, the electrolyte solution can exhibit better ionic conductivity.

In any embodiment, the first solvent includes one or more of organosiloxane compounds shown as follows:

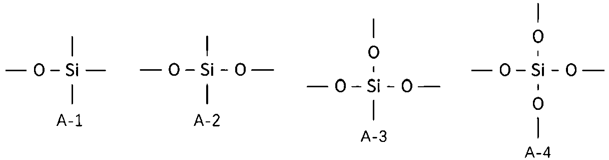

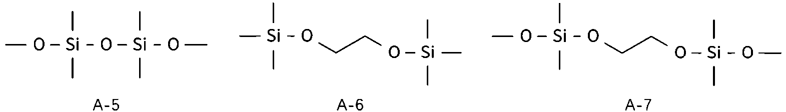

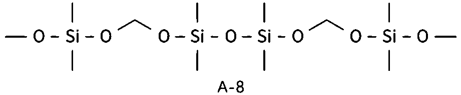

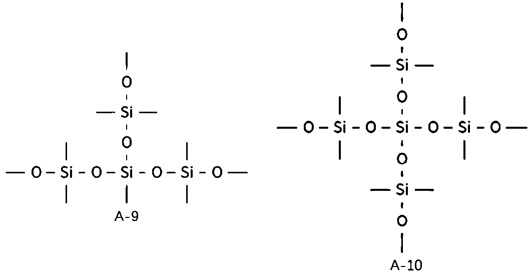

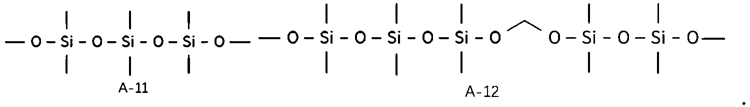

In any embodiment, the first solvent includes one or more of organosiloxane compounds shown in A-1, A-2, A-5, A-6, A-7, and A-11.

In this way, the battery can exhibit higher cycling stability and longer cycle life.

In any embodiment, the content of the first solvent ranges from 40% to 80%, and optionally, ranges from 50% to 70% of the total weight of the solvent. When the content of the first solvent is within the foregoing range, the first solvent can better stabilize the positive electrode and stabilize the negative electrode, and the formation of an electrolyte solution exhibiting suitable ionic conductivity is further facilitated, so that the battery exhibits high cycling stability and longer cycle life.

In any embodiment, the content of the first solvent is 100% of the total weight of the solvent.

In any embodiment, the solvent further includes a second solvent and/or a third solvent, and optionally, the solvent further includes both a second solvent and a third solvent.

In any embodiment, the second solvent includes one or more of ester and halogenated ester compounds, ether compounds, and first fluoroether compounds, none of α-carbon atoms directly bonded to an oxygen atom in ether functional groups in molecular structures of the first fluoroether compounds having a fluorine atom directly bonded to the α-carbon atoms, and optionally, includes one or more of ether compounds and first fluoroether compounds. The second solvent can facilitate the dissolution of electrolyte salts and facilitate ion transport, so that the electrolyte solution can exhibit good ionic conductivity. In this way, the coordination of the first solvent and the second solvent can further enhance the cycle performance of the battery.

In any embodiment, the ester and halogenated ester compounds include one or more of carbonate and halogenated carbonate compounds and carboxylic acid ester and halogenated carboxylic acid ester compounds, and optionally, include one or more of dimethyl carbonate, diethyl carbonate, ethyl methyl carbonate, ethylene carbonate, vinylene carbonate, propylene carbonate, fluoroethylene carbonate, difluoroethylene carbonate, methyl trifluoroethyl carbonate, ethyl trifluoroethyl carbonate, bis(2,2,2-trifluoroethyl) carbonate, methyl formate, ethyl formate, propyl formate, methyl acetate, ethyl acetate, propyl acetate, methyl propionate, ethyl propionate, propyl propionate, methyl 2,2,2-trifluoroacetate, and ethyl 2,2,2-trifluoroacetate.

In any embodiment, the ether compounds include one or more of dimethyl ether, diethyl ether, dipropyl ether, dibutyl ether, methyl ethyl ether, methyl propyl ether, methyl butyl ether, ethyl propyl ether, ethyl butyl ether, propyl butyl ether, dimethoxymethane, diethoxymethane, dipropoxymethane, 1,2-dimethoxyethane, dimethoxypropane, diethoxyethane, ethylene glycol methyl ethyl ether, diethylene glycol dimethyl ether, triethylene glycol dimethyl ether, tetraethylene glycol dimethyl ether, tetrahydrofuran, tetrahydropyran, 1,3-dioxolane, 1,3-dioxane, and 1,4-dioxane, and optionally, include one or more of dimethoxypropane and diethoxyethane.

In any embodiment, the first fluoroether compounds include one or more of the following compounds: 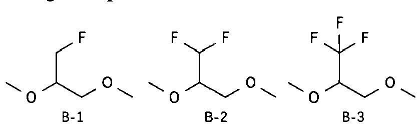 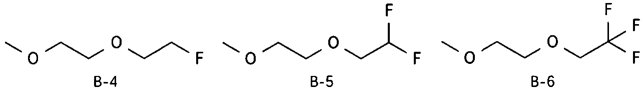 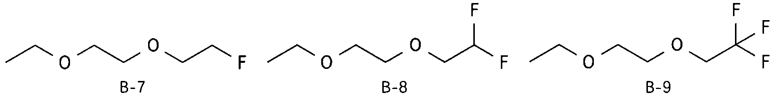 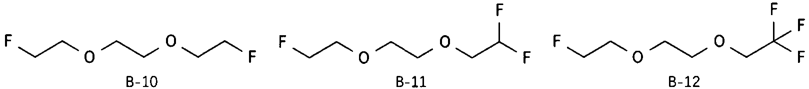 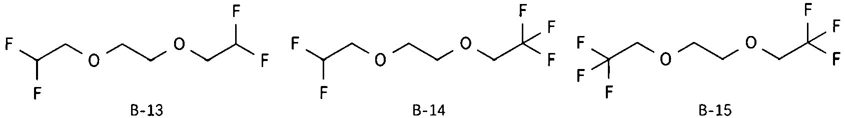 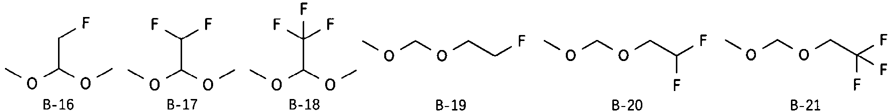 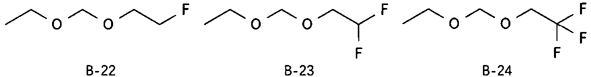 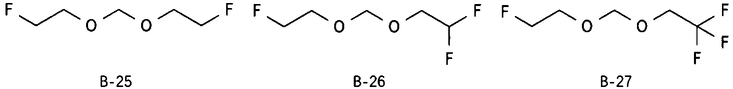 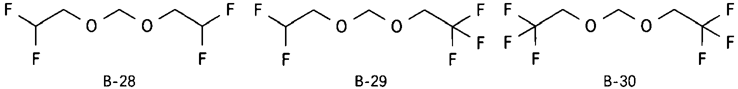 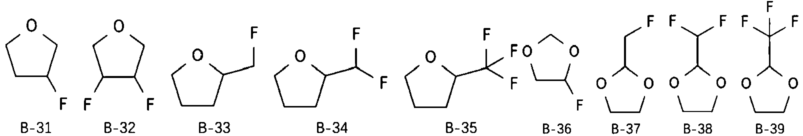 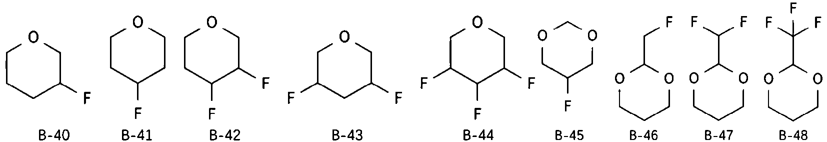 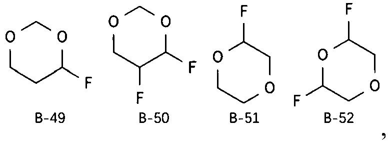 and optionally, include one or more of B-2 and B-5.

When falling within the foregoing range, on the one hand, the second solvent can facilitate the dissolution of electrolyte salts and can facilitate ion transport, so that the electrolyte solution exhibits good ionic conductivity, and on the other hand, can exhibit good stability for the negative electrode and the positive electrode, so that the cycle performance of the battery can be enhanced.

In any embodiment, the second solvent include one or more of dimethoxypropane, diethoxyethane, B-2, and B-5. When falling within the foregoing range, on the one hand, the second solvent can further facilitate the dissolution of electrolyte salts and can facilitate ion transport, so that the electrolyte solution exhibits good ionic conductivity, and on the other hand, can further enhance the stability for the negative electrode and the positive electrode, so that the cycle performance of the battery can be further enhanced.

In any embodiment, the third solvent includes one or more of alkane and halogenated alkane compounds, aromatic hydrocarbon and halogenated aromatic hydrocarbon compounds, and second fluoroether compounds, α-carbon atoms directly bonded to an oxygen atom in ether functional groups in molecular structures of the second fluoroether compounds having at least one fluorine atom directly bonded to the α-carbon atoms, and optionally, includes one or more of second fluoroether compounds. The third solvent is miscible with the first solvent and the second solvent, thereby enhancing the oxidation resistance of the electrolyte solution and further enhancing the stability of the electrolyte solution with positive electrodes operating above 4 V.

In any embodiment, the alkane and halogenated alkane compounds include one or more of cyclohexane and decafluoropentane.

In any embodiment, the aromatic hydrocarbon and halogenated aromatic hydrocarbon compounds include one or more of benzene, toluene, p-xylene, m-xylene, o-xylene, fluorobenzene, 1,4-difluorobenzene, 1,3-difluorobenzene, 1,2-difluorobenzene, trifluoromethylbenzene, trifluoromethoxybenzene.

In any embodiment, the second fluoroether compounds include one or more of 1,1,2,2-tetrafluoroethyl-2,2,3,3-tetrafluoropropyl ether, 1,2-bis(1,1,2,2-tetrafluoroethoxy)ethane, bis(2,2,2-trifluoroethyl) ether, 1,1,2,3,3,3-hexafluoropropyl ethyl ether, 1H,1H,5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl-2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, and bis(1,1,2,2-tetrafluoroethyl) ether, and optionally, include one or more of 1,1,2,2-tetrafluoroethyl-2,2,3,3-tetrafluoropropyl ether and 1,2-bis(1,1,2,2-tetrafluoroethoxy)ethane.

When falling within the foregoing range, the third solvent exhibits better compatibility with the first solvent and the second solvent, and can enhance the oxidation resistance of the electrolyte solution and facilitate the formation of an inorganic fluoride-rich SEI layer, thereby enhancing the coulombic efficiency and the cycle life of the battery.

In any embodiment, the third solvent includes one or more of 1,1,2,2-tetrafluoroethyl-2,2,3,3-tetrafluoropropyl ether, and 1,2-bis(1,1,2,2-tetrafluoroethoxy)ethane. When falling within the foregoing range, the third solvent can further enhance the oxidation resistance of the electrolyte solution and facilitate the formation of an inorganic fluoride-rich SEI layer, thereby further enhancing the coulombic efficiency and the cycle life of the battery.

In any embodiment, the content of the second solvent is less than or equal to 40%, and optionally, ranges from 10% to 30%, of the total weight of the solvent. In this way, the cycle performance of the battery can be further enhanced.

In any embodiment, the content of the third solvent is less than or equal to 40%, and optionally, ranges from 10% to 30%, of the total weight of the solvent. When having the content falling within the foregoing range, the third solvent can enhance the oxidation resistance of the electrolyte solution and facilitate the formation of an inorganic fluoride-rich SEI layer.

In any embodiment, the electrolyte solution further includes an additive, and the additive includes one or more of propane sultone, ethylene sulfate, ethylene sulfite, tris(trimethylsilyl) phosphate, tris(trimethylsilyl) phosphite, tris(trifluoroethyl) phosphate, tris(trifluoroethyl) phosphite, tris(trimethylsilyl) borate, dimethyl maleic anhydride, and 1,4-butylene diisocyanate. The additive can assist in film forming and enhance the stability of a positive electrode interface and/or the stability of a negative electrode interface.

In any embodiment, the content of the additive is less than or equal to 5%, and optionally, ranges from 0.5% to 3%, of the total weight of the electrolyte solution.

In any embodiment, the electrolyte solution includes a first anion, and the first anion includes one or more of bis(fluorosulfonyl)imide anions, bis(trifluoromethanesulfonyl)imide anions, bis(oxalato)borate anions, difluoro(oxalato)borate anions, difluorobis(oxalato)phosphate anions, tetrafluoro(oxalato)phosphate anions, difluorophosphate anions, hexafluorophosphate anions, tetrafluoroborate anions, hexafluoroarsenate anions, and trifluoromethanesulfonate anions.

In any embodiment, the first anion includes one or more of bis(fluorosulfonyl)imide anions and bis(trifluoromethanesulfonyl)imide anions. The first anion can decompose on an anode surface to form an inorganic fluoride-rich SEI layer, thereby facilitating dense metal deposition and allowing the battery to have longer cycle life. In addition, the first anion further exhibits good oxidative stability, so that the battery can exhibit high cycling stability and long cycle life within a wider voltage range.

In any embodiment, a molar concentration of the first anion in the electrolyte solution ranges from 0.5 mol/L to 4 mol/L, optionally, ranges from to 0.8 mol/L to 2.4 mol/L, or further optionally, ranges from 1.2 mol/L to 1.8 mol/L. The adjustment of the concentration of the first anion within the foregoing range neither affects the ion transport performance of the electrolyte solution nor compromises the stability of the electrolyte solution with the positive and negative electrodes, thereby allowing the battery to have longer cycle life.

In any embodiment, the electrolyte solution includes a first cation, and the first cation includes one or more of alkali metal ions, and alkaline earth metal ions, optionally, includes one or more of lithium ions, sodium ions, potassium ions, and magnesium ions, and further optionally, is lithium ions.

A second aspect of this application provides a battery cell, including the electrolyte solution in the first aspect of this application.

In any embodiment, the battery cell includes metal battery cells, metal-air battery cells, metal-sulfur battery cells, and anode-free metal battery cells, and optionally, lithium metal battery cells, anode-free lithium metal battery cells, lithium-air battery cells, and lithium-sulfur battery cells.

A third aspect of this application provides a battery, including the battery cell in the second aspect of this application.

A fourth aspect of this application provides a power consuming apparatus, including the battery in the third aspect of this application.

The power consuming apparatus of this application includes the battery provided in this application, and therefore has at least the same advantages as the battery.

### BRIEF DESCRIPTION OF THE DRAWINGS

To describe the technical solutions of the embodiments of this application more clearly, the following briefly describes the accompanying drawings for describing the embodiments of this application. Evidently, the drawings outlined below are merely a part of embodiments of this application. A person of ordinary skill in the art may derive other drawings from such drawings without making any creative efforts.
FIG. 1 is a schematic diagram of an embodiment of a battery cell according to this application;
FIG. 2 is a schematic exploded view of an embodiment of a battery cell according to this application;
FIG. 3 is a schematic diagram of an embodiment of a battery module according to this application;
FIG. 4 is a schematic diagram of an embodiment of a battery pack according to this application;
FIG. 5 is a schematic exploded view of an embodiment of a battery pack shown in FIG. 4; and
FIG. 6 is a schematic diagram of an embodiment of a power consuming apparatus including a battery of this application as a power source.

In the drawings, the components are not drawn to actual scale. Description of reference numerals: 1. battery pack, 2. upper box body, 3. lower box body, 4. battery module, 5. battery cell, 51. housing, 52. electrode assembly, and 53. cover plate.

### DETAILED DESCRIPTION

Hereinafter, embodiments of an electrolyte solution, a battery cell, a battery, and a power consuming apparatus of this application are specifically disclosed in the detailed description with appropriate reference to the accompanying drawings. However, there may be situations where unnecessary detailed explanations may be omitted. For example, there are situations where detailed explanations of well-known matters are omitted and repeated explanations of the same structure are actually provided. Thus, the following description does not become unnecessarily lengthy, which facilitates the easy comprehension of those skilled in the art. In addition, the accompanying drawings and the following explanations are provided for those skilled in the art to fully understand this application and are not intended to limit the subject matter recorded in the claims.

The "scope" disclosed in this application is limited in the form of a lower limit and an upper limit. The given scope is limited by selecting a lower limit and an upper limit, and the selected lower limit and upper limit limit the boundary of the special scope. The range limited in this way can include or exclude end values, and can be arbitrarily combined, that is, any lower limit can be combined with any upper limit to form a range. For example, if ranges of 60-120 and 80-110 are listed for a particular parameter, it is to be understood that ranges of 60-110 and 80-120 are also expected. In addition, if the minimum range values 1 and 2 are listed, and if the maximum range values 3, 4, and 5 are listed, the following ranges can all be expected: 1-3, 1-4, 1-5, 2-3, 2-4, and 2-5. In this application, unless otherwise specified, the numerical range "a to b" represents an abbreviated representation of any combination of real numbers between a and b, where a and b are both real numbers. For example, the numerical range "0-5" means that all real numbers between 0-5 are listed herein, and "0-5" is merely an abbreviated representation of the combination of these numbers. In addition, when a parameter is expressed as an integer ≥ 2, it is equivalent to disclosing that the parameter is, for example, an integer of 2, 3, 4, 5, 6, 7, 8, 9, 10, 11, 12, or the like.

Unless otherwise specified, all the embodiments and optional embodiments of this application can be combined with each other to form new technical solutions, and such technical solutions should be considered to be included in the disclosure of this application.

Unless otherwise specified, all the technical features and optional technical features of this application can be combined with each other to form new technical solutions, and such technical solutions should be considered to be included in the disclosure of this application.

Unless otherwise specified, all the steps in this application can be performed in the order described or in any order, and preferably in the order described. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

If there is no special explanation, the terms "including/comprising" mentioned in this application indicate open inclusion or closed inclusion. For example, "include" and "comprise" may mean that other components not listed may or may not further be included or comprised.

If not specifically stated, in this application, the term "or" is inclusive. For example, the phrase "A or B" means "A, B, or both A and B. More specifically, any one of the following conditions meets the condition "A or B": A is true (or present) and B is false (or not present); A is false (or not present) and B is true (or present); or both A and B are true (or present). In this disclosure, the phrases "at least one of A, B, and C" and "at least one of A, B, or C" both mean only A, only B, only C, or any combination of A, B, and C.

Unless otherwise specified, in this application, the terms "first", "second", "third", and the like are used to distinguish different objects, rather than to describe a specific order or primary-secondary relationship.

Unless otherwise specified, the terms used in this application have well-known meanings as commonly understood by persons skilled in the art.

Unless otherwise stated, the values of the parameters mentioned in this application can be measured by various test methods commonly used in the art, for example, can be measured according to the test methods given in the embodiments of this application. Unless otherwise specified, the test temperature of the parameters is 25°C.

The term "alkyl group" encompasses linear and branched alkyl groups. Examples of the alkyl group include, but are not limited to, methyl, ethyl, propyl, isopropyl, butyl, isobutyl, tert-butyl, pentyl, and isopentyl groups. In various embodiments, the C1-C10 alkyl group refers to an alkyl group with 1 to 10 carbon atoms.

The alkyl group part in the term "alkoxy group" encompasses linear and branched alkyl groups. Examples of the alkoxy group include, but are not limited to, methoxy, ethoxy, and propoxy. In various embodiments, the C1-C10 alkoxy group refers to an alkoxy group with 1 to 10 carbon atoms.

The term "alkoxyalkyl group" refers to a group in which one end of an alkyl group serves as an attachment point and the other end of the alkyl group is bonded to an alkoxy group. In various embodiments, the C2-C10 alkoxyalkyl group refers to an alkoxyalkyl group with 2 to 10 carbon atoms.

Throughout this specification, "#" indicates an attachment point.

Throughout this specification, the substituents of the compounds are disclosed in groups or ranges. It is expressly contemplated that such description includes each and every individual subcombination of the members of these groups and ranges. For example, the term "C1-C5 alkyl group" is expressly intended to individually disclose C1, C2, C3, C4, C5, C1-C5, C1-C4, C1-C3, C1-C2, C2-C5, C2-C4, C2-C3, C3-C5, C3-C4, and C4-C5 alkyl groups. As another example, the integer range "3-10" is expressly intended to individually disclose 3, 4, 5, 6, 7, 8, 9, and 10. Accordingly, other groups or ranges are to be expressly contemplated.

A battery mentioned in embodiments of this application may be a single physical module including one or more battery cells to provide a higher voltage and a higher capacity. For example, the battery provided in this application may include a battery cell, a battery module, a battery pack, or the like.

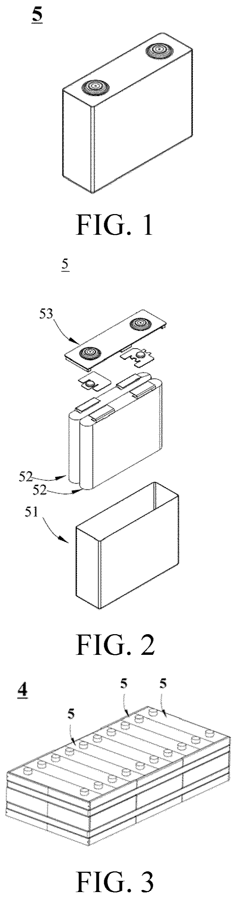

The battery cell is the smallest unit constituting the battery, and can achieve functions of charging and discharging independently. The battery cell may be cylindrical, flat-shaped, cuboid-shaped, or of another shape, which is also not limited in the embodiments of this application. FIG. 1 shows a battery cell 5 of a cuboidal structure as an example.

When a plurality of battery cells are provided, the plurality of battery cells are connected in series, in parallel, or in series-parallel through a bus component. In some embodiments, the battery may be a battery module. When a plurality of battery cells are provided, the plurality of battery cells are arranged and fastened to form one battery module. In some embodiments, the battery may be a battery pack. The battery pack includes a box body and battery cells. The battery cells or the battery module is accommodated in the box body. In some embodiments, the box body may be used as a part of the chassis structure of a vehicle. For example, a part of the box body may serve as at least a part of the underbody of a vehicle, or a part of the box body may serve as at least a part of the cross beam and longitudinal beam of a vehicle.

In some embodiments, the battery may be an energy storage apparatus. The energy storage apparatus includes an energy storage container, an energy storage cabinet, and the like.

The battery cell provided in the embodiments of this application includes battery cells using alkali metals, alkaline earth metals, alloys thereof, or the like as negative electrode active materials. For example, the battery cell provided in the embodiments of this application includes metal battery cells, metal-air battery cells, metal-sulfur battery cells, anode-free metal battery cells, and the like. As an example, the battery cell may include a lithium metal battery cell, an anode-free lithium metal battery cell, a lithium-air battery cell, a lithium-sulfur battery cell, a sodium metal battery cell, an anode-free sodium metal battery cell, a sodium-air battery cell, a sodium-sulfur battery cell, a potassium metal battery cell, an anode-free potassium metal battery cell, a potassium-air battery cell, a potassium-sulfur battery cell, a magnesium metal battery cell, an anode-free magnesium metal battery cell, a magnesium-air battery cell, a magnesium-sulfur battery cell, or the like.

The battery cell generally includes an electrode assembly. The electrode assembly usually includes a positive electrode plate, a negative electrode plate, and a separator located between the positive electrode plate and the negative electrode plate. The electrode assembly may be either of a wound structure or a stacked structure, which is not limited in the embodiments of this application.

The battery cell may further include an outer packaging. The outer packaging can be used for packaging the electrode assembly and an electrolyte solution. The outer packaging may be a hard case, for example, a hard plastic case, an aluminum case, or a steel case. The outer packaging may alternatively be a soft pack, for example, a pouch type soft pack. The soft pack may be made from plastic, for example, include one or more of polypropylene (PP), polybutylene terephthalate (PBT), and polybutylene succinate (PBS).

In some embodiments, as shown in FIG. 2, the outer packaging may include a housing 51 and a cover plate 53. The housing 51 may include a bottom plate and a side plate connected to the bottom plate. The bottom plate and the side plate enclose an accommodating cavity. The housing 51 is provided with an opening in communication with the accommodating cavity, and the cover plate 53 is used for covering the opening to close the accommodating cavity. The electrode assembly 52 is packaged in the accommodating cavity. One or more electrode assemblies 52 may be included in the battery cell 5, which may be adjusted as required.

In some embodiments, the battery cell may be assembled into a battery module, the battery module may include a plurality of battery cells, and a specific quantity of battery cells may be adjusted according to the application and capacity of the battery module. FIG. 3 is a schematic diagram of a battery module 4 as an example. As shown in FIG. 3, in the battery module 4, a plurality of battery cells 5 may be arranged sequentially in a length direction of the battery module 4. Certainly, the plurality of battery cells 5 may be arranged in any other manner. Further, the plurality of battery cells 5 may be fixed by a fastener.

Optionally, the battery module 4 may further include a shell having an accommodating space. The plurality of battery cells 5 are accommodated in the accommodating space.

In some embodiments, the battery modules may further form a battery pack, and a quantity of battery modules included in the battery pack may be adjusted based on the application and capacity of the battery pack.

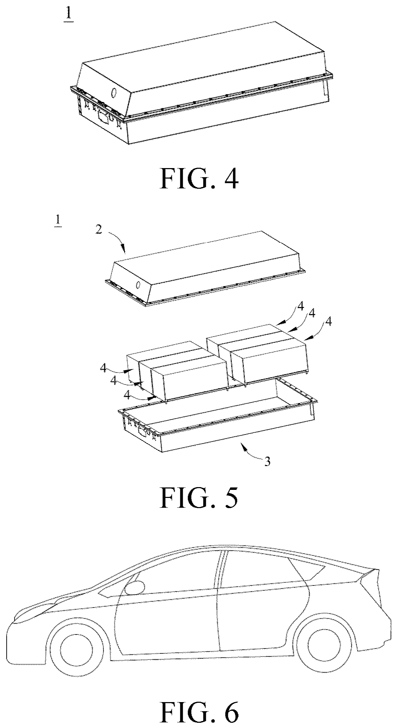

FIG. 4 and FIG. 5 are schematic diagrams of a battery pack 1 as an example. As shown in FIG. 4 and FIG. 5, the battery pack 1 may include a box body and a plurality of battery modules 4 arranged in the box body. The box body includes an upper box body 2 and a lower box body 3. The upper box body 2 is used for covering the lower box body 3 and form an enclosed space for accommodating the battery modules 4. The plurality of battery modules 4 may be arranged in the box body in any manner.

High energy density is an irreversible trend in the development of future batteries. Batteries using alkali metals, alkaline earth metals, alloys thereof, or the like as negative electrode active materials have attracted widespread attention due to their high energy density. However, the large-scale application of the above batteries faces numerous challenges. For example, currently, an electrolyte solution usually uses an ether solvent as a main solvent. However, the ether solvent has weak oxidation resistance, and may undergo oxidative decomposition on a positive electrolyte side after a number of charge-discharge cycles, resulting in poor cycle performance of a battery.

To enhance the cycle performance of the battery, a currently adopted strategy is mainly to improve the composition of an electrolyte solution.

In view of this, the inventors have made improvements to an electrolyte solution.

An electrolyte solution provided in an embodiment of this application includes a solvent. The solvent includes a first solvent. The first solvent is an organosiloxane compound. The content of the first solvent is greater than or equal to 20% of the total weight of the solvent.

Currently, an organosiloxane compound, when used in an electrolyte solution, serves as an additive of the electrolyte solution. The concentration of the additive in the electrolyte solution is typically below 15%, and further, is typically below 5%.

The inventors find during research that when the organosiloxane compound is used as a main solvent (with the content greater than or equal to 20% of the total weight of the solvent) of the electrolyte solution, the oxidation resistance of the electrolyte solution can be enhanced and the oxidative decomposition of the electrolyte solution can be reduced, thereby enhancing the cycling stability of the battery and extending the cycle life of the battery.

The first solvent of the electrolyte solution provided in this embodiment of this application is an organosiloxane compound. The molecular structure of the organosiloxane compound includes at least one Si-O bond. Compared with a C-O bond, the Si-O bond has better oxidation resistance. For example, compared with a conventional C-O bond-contining ether solvent, for example, 1,2-dimethoxyethane (DME), the first solvent can have a lower highest occupied molecular orbital (HOMO) energy level. Therefore, the electrolyte solution provided in this embodiment of this application can exhibit enhanced oxidation resistance, resulting in reduced oxidative decomposition of the electrolyte solution, thereby enabling the battery using the electrolyte solution to exhibit high cycling stability and long cycle life.

In some embodiments, the first solvent may include one or more of organosiloxane compounds represented by Formula (I),

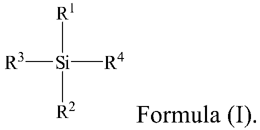

R¹, R², R³, and R⁴ each independently include one of hydrogen atoms, C1-C10 alkyl groups, C1-C10 alkoxy groups, C2-C10 alkoxyalkyl groups, and groups represented by Formula (a), and at least one of R¹, R², R³, and R⁴ includes one of C1-C10 alkoxy groups and the groups represented by Formula (a),

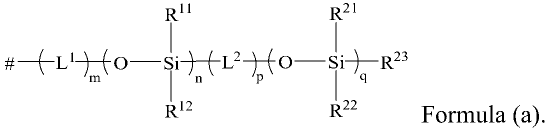

# represents an attachment point, L¹ and L² each independently represent one of C1-C10 alkylene groups, C1-C10 alkyleneoxy groups, and C2-C10 alkyleneoxyalkylene groups, R¹¹, R¹², R²¹, R²², and R²³ each independently include one of hydrogen atoms, C1-C10 alkyl groups, C1-C10 alkoxy groups, and C2-C10 alkoxyalkyl groups, m and p each independently represent 0 or 1, n and q each independently represent 0 or an integer from 1 to 5, and n and q are not both 0.

The first solvent is the organosiloxane compounds represented by Formula (I), and silicon atoms have a relatively strong shielding effect on the electron clouds of oxygen atoms, thereby enabling the electrolyte solution to exhibit low solvation energy. On the one hand, the decomposition and film forming of the anion in the electrolyte solution can be facilitated, for example, an inorganic fluoride-rich SEI layer can be formed, thereby enhancing the cycle performance of the battery. On the other hand, the electrode potential of the negative electrode can be elevated, the reductive decomposition of the electrolyte solution can be reduced, and the surface energy of the electrolyte solution can be enhanced, thereby facilitating dense metal deposition, and further enhancing the coulombic efficiency and cycling stability of the battery.

The first solvent is the organosiloxane compounds represented by Formula (I), and through the design of the molecular structure, the first solvent can exhibit good solubility for electrolyte salts, and the first solvent can further exhibit good miscibility with other solvents, thereby enhancing the oxidation resistance of the electrolyte solution at a high voltage (for example, above 4 V), and further facilitating dense metal deposition.

Therefore, when the first solvent is the organosiloxane compounds represented by Formula (I), the oxidation resistance of the electrolyte solution can be enhanced and the oxidative decomposition of the electrolyte solution can be reduced, thereby further stabilizing a negative electrode and reducing the reductive decomposition of the electrolyte solution, so that the electrolyte solution provided in the embodiments of this application can enable the battery to exhibit high cycling stability and long cycle life in a wider voltage range.

n and q each independently represent 0 or an integer from 1 to 5. When n represents an integer from 2 to 5, groups in different parentheses may be the same or different. For example, when n is 2, -O-Si(R¹¹)(R¹²)- close to L¹ is denoted as a first group, and -O-Si(R¹¹)(R¹²)- close to L² is denoted as a second group. R¹¹ in the first group and R¹¹ in the second group may be the same or different, and R¹² in the first group and R¹² in the second group may be the same or different. When q represents an integer from 2 to 5, groups in different parentheses may be the same or different. For example, when q is 2, -O-Si(R²¹)(R²²)-close to L² is denoted as a first group, and -O-Si(R²¹)(R²²)- close to R²³ is denoted as a second group. R²¹ in the first group and R²¹ in the second group may be the same or different, and R²² in the first group and R²² in the second group may be the same or different.

In some embodiments, R¹, R², R³, and R⁴ each independently include one of C1-C5 alkyl groups, C1-C5 alkoxy groups, C2-C5 alkoxyalkyl groups, and the groups represented by Formula (a). In this way, the steric hindrance of the first solvent can be reduced, thereby enhancing the solubility of the first solvent for electrolyte salts and enhancing the miscibility of the first solvent with other solvents, so that the battery can exhibit high cycling stability and long cycle life.

In some embodiments, two of R¹, R², R³, and R⁴ each independently include one of C1-C10 alkoxy groups and the groups represented by Formula (a). Optionally, two of R¹, R², R³, and R⁴ each independently include one of C1-C5 alkoxy groups and the groups represented by Formula (a). In this way, the steric hindrance of the first solvent can be reduced, thereby enhancing the solubility of the first solvent for electrolyte salts and enhancing the miscibility of the first solvent with other solvents, so that the battery can exhibit high cycling stability and long cycle life.

In some embodiments, R¹¹, R¹², R²¹, R²², and R²³ each independently include one of C1-C5 alkyl groups, C1-C5 alkoxy groups, and C2-C5 alkoxyalkyl groups.

In some embodiments, R¹¹, R¹², R²¹, and R²² each independently include one of C1-C10 alkyl groups and C2-C10 alkenyl groups, and R²³ includes one of C1-C10 alkyl groups, C1-C10 alkoxy groups, and C2-C10 alkoxyalkyl groups. Optionally, R¹¹, R¹², R²¹, and R²² are each independently C1-C5 alkyl groups, and R²³ includes one of C1-C5 alkyl groups, C1-C5 alkoxy groups, and C2-C5 alkoxyalkyl groups.

In some embodiments, m and p are not both 0. For example, m is 0, and p is 1, or m is 1, and p is 0, or m and p are both 1.

In some embodiments, L¹ and L² each independently represent one of C1-C5 alkylene groups, C1-C5 alkyleneoxy groups, and C2-C5 alkyleneoxyalkylene groups.

When two silicon atoms are bridged via linking groups L¹ and L², the shielding effect of the silicon atoms on the lone-pair electrons of oxygen atoms can be mitigated to some extent, and the chelation of the linking groups L¹ and L² and terminal oxygen atoms with cations in the electrolyte solution can be further facilitated to form a solvation structure, so that the first solvent can exhibit better solubility for electrolyte salts and the first solvent can further exhibit better miscibility with other solvents. In this way, the electrolyte solution can exhibit suitable ionic conductivity, thereby enhancing the cycle performance of the battery.

In some embodiments, L¹ and L² each independently represent one of C2-C3 alkyleneoxy groups. L¹ and L² fall within the foregoing ranges, the chelation of the first solvent with cations in the electrolyte solution can be further facilitated to form a solvation structure, so that the first solvent can exhibit better solubility for electrolyte salts and the first solvent can further exhibit better miscibility with other solvents. In this way, the electrolyte solution can exhibit suitable ionic conductivity, thereby further enhancing the cycle performance of the battery.

In some embodiments, n and q each independently represent 0, 1, or 2, and n and q are not both 0.

In some embodiments, m, n, and p are all 0, and q is an integer from 1 to 5.

In some embodiments, m, n, and p are all 0, q is 1 or 2, R²¹, R²², and R²³ each independently include one of C1-C10 alkyl groups, C1-C10 alkoxy groups, and C2-C10 alkoxyalkyl groups. Optionally, m, n, and p are all 0, q is 1 or 2, R²¹, R²², and R²³ each independently include one of C1-C5 alkyl groups, C1-C5 alkoxy groups, and C2-C5 alkoxyalkyl groups. Further optionally, m, n, and p are all 0, q is 1 or 2, R²¹ and R²² are each independently C1-C5 alkyl groups, R²³ is C1-C5 alkyl groups, C1-C5 alkoxy groups, and C2-C5 alkoxyalkyl groups.

When falling within the foregoing ranges, the groups represented by Formula (a) can enable the first solvent to exhibit better solubility for electrolyte salts and enable the first solvent to further exhibit better miscibility with other solvents. In this way, the electrolyte solution can exhibit suitable ionic conductivity, thereby enhancing the cycle performance of the battery.

In some embodiments, m and n both 0, p is 1, and q is an integer from 1 to 5.

In some embodiments, m and n are both 0, p is 1, q is 1 or 2, L² represents one of C1-C10 alkylene groups, C1-C10 alkyleneoxy groups, and C2-C10 alkyleneoxyalkylene groups, and R²¹, R²², and R²³ each independently include one of C1-C10 alkyl groups, C1-C10 alkoxy groups, and C2-C10 alkoxyalkyl groups. Optionally, m and n are both 0, p is 1, q is 1 or 2, L² represents one of C1-C5 alkylene groups, C1-C5 alkyleneoxy groups, and C2-C5 alkyleneoxyalkylene groups, and R²¹, R²², and R²³ each independently include one of C1-C5 alkyl groups, C1-C5 alkoxy groups, and C2-C5 alkoxyalkyl groups. Further optionally, m and n are both 0, p is 1, q is 1 or 2, L² represents one of C1-C5 alkylene groups, C1-C5 alkyleneoxy groups, and C2-C5 alkyleneoxyalkylene groups, R²¹ and R²² are each independently C1-C5 alkyl groups, and R²³ includes one of C1-C5 alkyl groups, C1-C5 alkoxy groups, and C2-C5 alkoxyalkyl groups. Furthermore optionally, m and n are both 0, p is 1, q is 1 or 2, L² represents C2-C3 alkyleneoxy groups, R²¹ and R²² are each independently C1-C5 alkyl groups, and R²³ includes one of C1-C5 alkyl groups, C1-C5 alkoxy groups, and C2-C5 alkoxyalkyl groups.

When falling within the foregoing ranges, the groups represented by Formula (a) can enable the first solvent to exhibit better solubility for electrolyte salts and enable the first solvent to further exhibit better miscibility with other solvents. In this way, the electrolyte solution can exhibit suitable ionic conductivity, thereby enhancing the cycle performance of the battery.

In some embodiments, m is 0, n is an integer from 1 to 5, p is 1, and q is an integer from 1 to 5.

In some embodiments, m is 0, n is 1 or 2, p is 1, q is 1 or 2, L² represents one of C1-C10 alkylene groups, C1-C10 alkyleneoxy groups, and C2-C10 alkyleneoxyalkylene groups, and R¹¹, R¹², R²¹, R²², and R²³ each independently include one of C1-C10 alkyl groups, C1-C10 alkoxy groups, and C2-C10 alkoxyalkyl groups. Optionally, m is 0, n is 1 or 2, p is 1, q is 1 or 2, L² represents one of C1-C5 alkylene groups, C1-C5 alkyleneoxy groups, and C2-C5 alkyleneoxyalkylene groups, and R¹¹, R¹², R²¹, R²², and R²³ each independently include one of C1-C5 alkyl groups, C1-C5 alkoxy groups, and C2-C5 alkoxyalkyl groups. Further optionally, m is 0, n is 1 or 2, p is 1, q is 1 or 2, L² represents one of C1-C5 alkylene groups, C1-C5 alkyleneoxy groups, and C2-C5 alkyleneoxyalkylene groups, R¹¹, R¹², R²¹, and R²² are each independently C1-C5 alkyl groups, and R²³ includes one of C1-C5 alkyl groups, C1-C5 alkoxy groups, and C2-C5 alkoxyalkyl groups. Further optionally, m is 0, n is 1 or 2, p is 1, q is 1 or 2, L² represents C2-C3 alkyleneoxy groups, R¹¹, R¹², R²¹, and R²² are each independently C1-C5 alkyl groups, and R²³ includes one of C1-C5 alkyl groups, C1-C5 alkoxy groups, and C2-C5 alkoxyalkyl groups.

In some embodiments, m is 1, n is an integer from 1 to 5, p is 1, and q is an integer from 1 to 5.

In some embodiments, m is 1, n is 1 or 2, p is 1, q is 1 or 2, L¹ and L² each independently represent one of C1-C10 alkylene groups, C1-C10 alkyleneoxy groups, and C2-C10 alkyleneoxyalkylene groups, and R¹¹, R¹², R²¹, R²², and R²³ each independently include one of C1-C10 alkyl groups, C1-C10 alkoxy groups, and C2-C10 alkoxyalkyl groups. Optionally, m is 1, n is 1 or 2, p is 1, q is 1 or 2, L¹ and L² each independently represent one of C1-C5 alkylene groups, C1-C5 alkyleneoxy groups, and C2-C5 alkyleneoxyalkylene groups, and R¹¹, R¹², R²¹, R²², and R²³ each independently include one of C1-C5 alkyl groups, C1-C5 alkoxy groups, and C2-C5 alkoxyalkyl groups. Further optionally, m is 1, n is 1 or 2, p is 1, q is 1 or 2, L¹ and L² each independently represent one of C1-C5 alkylene groups, C1-C5 alkyleneoxy groups, and C2-C5 alkyleneoxyalkylene groups, and R¹¹, R¹², R²¹, and R²² are each independently C1-C5 alkyl groups, and R²³ includes one of C1-C5 alkyl groups, C1-C5 alkoxy groups, and C2-C5 alkoxyalkyl groups. Furthermore optionally, m is 1, n is 1 or 2, p is 1, q is 1 or 2, L¹ and L² each independently represent C2-C3 alkyleneoxy groups, R¹¹, R¹², R²¹, and R²² are each independently C1-C5 alkyl groups, and R²³ includes one of C1-C5 alkyl groups, C1-C5 alkoxy groups, and C2-C5 alkoxyalkyl groups.

When falling within the foregoing ranges, the groups represented by Formula (a) can enable the first solvent to exhibit better solubility for electrolyte salts and enable the first solvent to further exhibit better miscibility with other solvents. In this way, the electrolyte solution can exhibit suitable ionic conductivity, thereby enhancing the cycle performance of the battery.

In some embodiments, a quantity of silicon atoms in the first solvent is denoted as x, a quantity of oxygen atoms in the first solvent is denoted as y, 0.5 ≤ y/x ≤ 4, and optionally, 1 ≤ y/x ≤ 2.

The inventors further find after in-depth research that the further adjustment of a ratio of a quantity of oxygen atoms to a quantity of silicon atoms in the molecular structure of the organosiloxane compound can enable the first solvent to exhibit better solubility for electrolyte salts and can further enable the first solvent to exhibit better miscibility with other solvents. When the ratio y/x of the quantity of oxygen atoms to the quantity of silicon atoms is small, because silicon atoms reduce the polarity of the molecules of the first solvent and have a shielding effect on the electron clouds of oxygen atoms, the coordination ability of oxygen atoms with ions is weakened, the solubility of the first solvent for electrolyte salts is reduced, the ionic conductivity of the prepared electrolyte solution is reduced, and the cycle performance of the battery is affected. When the ratio y/x of the quantity of oxygen atoms to the quantity of silicon atoms is large, the steric hindrance of the first solvent is increased, and the electron clouds of a plurality of oxygen atoms exhibit mutual repulsion. As a result, the solubility of the first solvent for electrolyte salts is reduced, and the miscibility of the first solvent with other solvents is also reduced.

In some embodiments, a quantity of silicon atoms in the first solvent is denoted as x, 1 ≤ x ≤ 10, optionally, 1 ≤ x < 5, and further optionally, 1 ≤ x ≤ 3.

The inventors further find after in-depth research that when the quantity of silicon atoms in the first solvent falls within the foregoing range, the electrolyte solution can exhibit better ionic conductivity.

In some embodiments, a quantity of oxygen atoms in the first solvent is denoted as y, 1 ≤ y ≤ 20, optionally, 1 ≤ y ≤ 10, and further optionally, 1 ≤ y ≤ 6.

The inventors further find after in-depth research that when the quantity of oxygen atoms in the first solvent falls within the foregoing range, the electrolyte solution can exhibit better ionic conductivity.

In some embodiments, 0.5 ≤ y/x ≤ 4, 1 ≤ x ≤ 10, and 1 ≤ y ≤ 20. Optionally, 1 ≤ y/x ≤ 2, 1 ≤ x ≤ 5, and 1 ≤ y ≤ 10. Further optionally, 1 ≤ y/x ≤ 2, 1 ≤ x ≤ 3, and 1 ≤ y ≤ 6. In this way, the first solvent can exhibit better solubility for electrolyte salts and the first solvent can further exhibit better miscibility with other solvents, thereby facilitating the formation of an electrolyte solution exhibiting suitable ionic conductivity, and further enhancing the cycle performance of the battery.

In some embodiments, the first solvent may include one or more of organosiloxane compounds shown as follows:

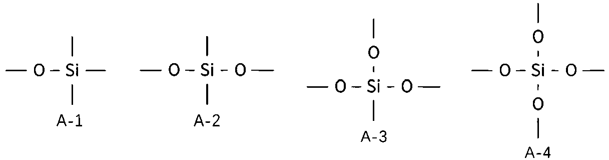

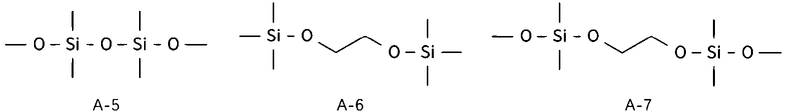

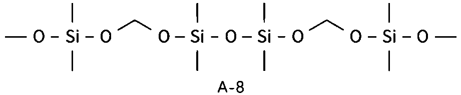

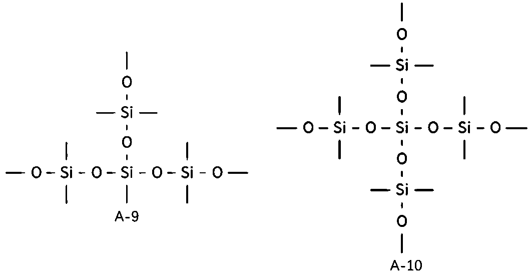

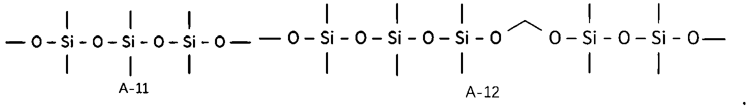

In some embodiments, the first solvent may include one or more of organosiloxane compounds shown in A-1, A-2, A-5, A-6, A-7, and A-11. In this way, the battery can exhibit higher cycling stability and longer cycle life.

In some embodiments, the first solvent may include one or more of organosiloxane compounds shown in A-6 and A-7. In this way, the battery can exhibit higher cycling stability and longer cycle life.

In some embodiments, the content of the first solvent may be 100% of the total weight of the solvent.

In some embodiments, the content of the first solvent may range from 20% to 90%, and optionally, range from 30% to 85%, 40% to 80%, or 50% to 70% of the total weight of the solvent. When the content of the first solvent is within the foregoing range, the first solvent can better stabilize the positive electrode and stabilize the negative electrode, and the formation of an electrolyte solution exhibiting suitable ionic conductivity is further facilitated, so that the battery exhibits high cycling stability and longer cycle life.

In some embodiments, the solvent may further include a second solvent.

In some embodiments, the second solvent may include one or more of ester and halogenated ester compounds, ether compounds, and first fluoroether compounds, none of α-carbon atoms directly bonded to an oxygen atom in ether functional groups in molecular structures of the first fluoroether compounds having a fluorine atom directly bonded to the α-carbon atoms.

The silicon atoms in the molecular structure of the first solvent have a particular shielding effect on the lone-pair electrons of oxygen atoms. As a result, the solubility of the first solvent for electrolyte salts is reduced, and the ionic conductivity of the electrolyte solution is not excellent enough. The second solvent can facilitate the dissolution of electrolyte salts and facilitate ion transport, so that the electrolyte solution can exhibit good ionic conductivity. In this way, the coordination of the first solvent and the second solvent can further enhance the cycle performance of the battery.

**In** some embodiments, the ester and halogenated ester compounds may include one or more of carbonate and halogenated carbonate compounds and carboxylic acid ester and halogenated carboxylic acid ester compounds.

In some embodiments, the ester and halogenated ester compounds include one or more of dimethyl carbonate, diethyl carbonate, ethyl methyl carbonate, ethylene carbonate, vinylene carbonate, propylene carbonate, fluoroethylene carbonate, difluoroethylene carbonate, methyl trifluoroethyl carbonate, ethyl trifluoroethyl carbonate, bis(2,2,2-trifluoroethyl) carbonate, methyl formate, ethyl formate, propyl formate, methyl acetate, ethyl acetate, propyl acetate, methyl propionate, ethyl propionate, propyl propionate, methyl 2,2,2-trifluoroacetate, and ethyl 2,2,2-trifluoroacetate.

In some embodiments, the ether compounds may include one or more of dimethyl ether, diethyl ether, dipropyl ether, dibutyl ether, methyl ethyl ether, methyl propyl ether, methyl butyl ether, ethyl propyl ether, ethyl butyl ether, propyl butyl ether, dimethoxymethane, diethoxymethane, dipropoxymethane, 1,2-dimethoxyethane, dimethoxypropane, diethoxyethane, ethylene glycol methyl ethyl ether, diethylene glycol dimethyl ether, triethylene glycol dimethyl ether, tetraethylene glycol dimethyl ether, tetrahydrofuran, tetrahydropyran, 1,3-dioxolane, 1,3-dioxane, and 1,4-dioxane. Optionally, the ether compounds may include one or more of dimethoxypropane and diethoxyethane.

**In** some embodiments, the first fluoroether compounds may include one or more of the following compounds: 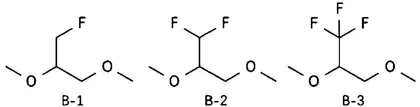 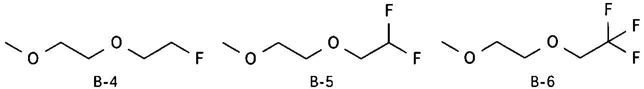 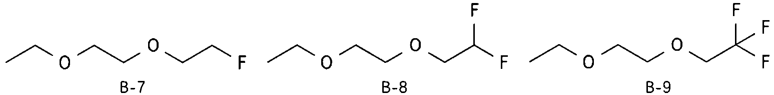 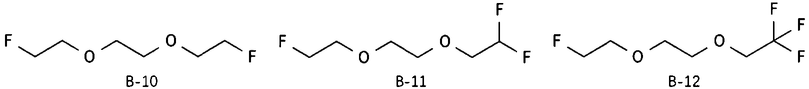 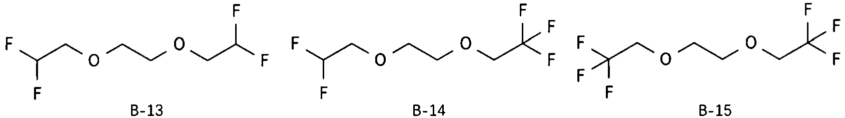 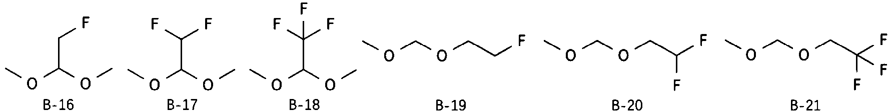 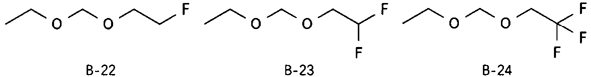 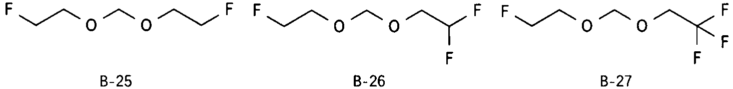 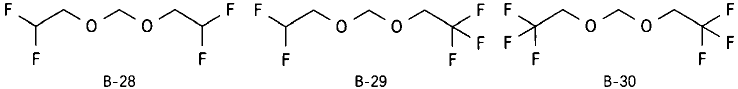 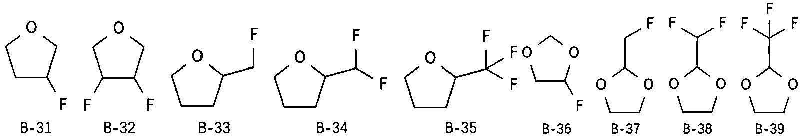 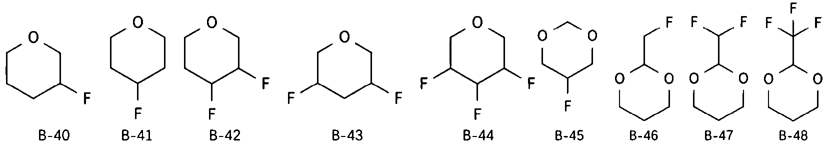 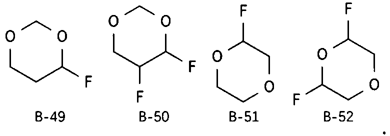 Optionally, the first fluoroether compounds may include one or more of B-2 and B-5.

When falling within the foregoing range, on the one hand, the second solvent can facilitate the dissolution of electrolyte salts and can facilitate ion transport, so that the electrolyte solution exhibits good ionic conductivity, and on the other hand, can exhibit good stability for the negative electrode and the positive electrode, so that the cycle performance of the battery can be enhanced.

In some embodiments, the second solvent may include one or more of ether compounds and first fluoroether compounds.

In some embodiments, the second solvent may include one or more of dimethoxypropane, diethoxyethane, B-2, and B-5.

When falling within the foregoing range, on the one hand, the second solvent can further facilitate the dissolution of electrolyte salts and can facilitate ion transport, so that the electrolyte solution exhibits good ionic conductivity, and on the other hand, can further enhance the stability for the negative electrode and the positive electrode, so that the cycle performance of the battery can be further enhanced.

In some embodiments, the content of the second solvent may be less than or equal to 40%, and optionally, ranges from 10% to 30%, of the total weight of the solvent. In this way, the cycle performance of the battery can be further enhanced.

In some embodiments, the solvent may further include a third solvent.

In some embodiments, the third solvent may include one or more of alkane and halogenated alkane compounds, aromatic hydrocarbon and halogenated aromatic hydrocarbon compounds, and second fluoroether compounds, α-carbon atoms directly bonded to an oxygen atom in ether functional groups in molecular structures of the second fluoroether compounds having at least one fluorine atom directly bonded to the α-carbon atoms.

The third solvent is miscible with the first solvent and the second solvent, thereby enhancing the oxidation resistance of the electrolyte solution and further enhancing the stability of the electrolyte solution with positive electrodes operating above 4 V.

In some embodiments, the third solvent may include one or more of halogenated alkane compounds, halogenated aromatic hydrocarbon compounds, and second fluoroether compounds. When containing fluorine atoms, the third solvent facilitates decomposition on a negative electrode to generate an inorganic fluoride-rich SEI layer, thereby further facilitating dense metal deposition and further enhancing the coulombic efficiency and the cycle life of the battery. In this way, when containing fluorine atoms, the third solvent can further enhance the reversibility of the positive and negative electrodes, thereby enhancing the coulombic efficiency and the cycle life of the battery.

In some embodiments, the alkane and halogenated alkane compounds may include one or more of cyclohexane and decafluoropentane.

In some embodiments, the aromatic hydrocarbon and halogenated aromatic hydrocarbon compounds may include one or more of benzene, toluene, p-xylene, m-xylene, o-xylene, fluorobenzene, 1,4-difluorobenzene, 1,3-difluorobenzene, 1,2-difluorobenzene, trifluoromethylbenzene, trifluoromethoxybenzene.

In some embodiments, the second fluoroether compounds may include one or more of 1,1,2,2-tetrafluoroethyl-2,2,3,3-tetrafluoropropyl ether, 1,2-bis(1,1,2,2-tetrafluoroethoxy)ethane, bis(2,2,2-trifluoroethyl) ether, 1,1,2,3,3,3-hexafluoropropyl ethyl ether, 1H,1H,5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl-2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, and bis(1,1,2,2-tetrafluoroethyl) ether, and optionally, include one or more of 1,1,2,2-tetrafluoroethyl-2,2,3,3-tetrafluoropropyl ether and 1,2-bis(1,1,2,2-tetrafluoroethoxy)ethane.

When falling within the foregoing range, the third solvent exhibits better compatibility with the first solvent and the second solvent, and can enhance the oxidation resistance of the electrolyte solution and facilitate the formation of an inorganic fluoride-rich SEI layer, thereby enhancing the coulombic efficiency and the cycle life of the battery.

In some embodiments, the third solvent may include one or more of halogenated alkane compounds, halogenated aromatic hydrocarbon compounds, and second fluoroether compounds.

In some embodiments, the third solvent may include one or more of second fluoroether compounds.

In some embodiments, the third solvent may include one or more of 1,1,2,2-tetrafluoroethyl-2,2,3,3-tetrafluoropropyl ether, and 1,2-bis(1,1,2,2-tetrafluoroethoxy)ethane.

When falling within the foregoing range, the third solvent can further enhance the oxidation resistance of the electrolyte solution and facilitate the formation of an inorganic fluoride-rich SEI layer, thereby further enhancing the coulombic efficiency and the cycle life of the battery.

In some embodiments, the content of the third solvent may be less than or equal to 40%, and optionally, ranges from 10% to 30%, of the total weight of the solvent. When having the content falling within the foregoing range, the third solvent can enhance the oxidation resistance of the electrolyte solution and facilitate the formation of an inorganic fluoride-rich SEI layer. In addition, because the third solvent exhibits limited solubility in the electrolyte solution, when the content of the third solvent falls within the foregoing ranges, the adverse effects of the third solvent on the solubility of electrolyte salts and ion transport can be further reduced.

In some embodiments, the solvent may further include both a second solvent and a third solvent. In this way, the dissolution of electrolyte salt can be facilitated and ion transport can be facilitated, to enable the electrolyte solution to exhibit good ionic conductivity, thereby further enhancing the oxidation resistance of the electrolyte solution, facilitating the formation of an inorganic fluoride-rich SEI layer, and further enabling the battery to exhibit better cycle performance.

In some embodiments, the electrolyte solution may further include an additive. A type of the additive is not particularly limited in this application, provided that the essence of this application is not impaired. As an example, the additive may include one or more of propane sultone (PS), ethylene sulfate (DTD), ethylene sulfite (ES), tris(trimethylsilyl) phosphate (TMSP), tris(trimethylsilyl) phosphite, tris(trifluoroethyl) phosphate, tris(trifluoroethyl) phosphite, tris(trimethylsilyl) borate, dimethyl maleic anhydride, and 1,4-butylene diisocyanate.

The additive can assist in film forming and enhance the stability of a positive electrode interface and/or the stability of a negative electrode interface.

In some embodiments, the content of the additive may be less than or equal to 5%, and optionally, ranges from 0.5% to 3%, of the total weight of the electrolyte solution. When the content of the additive falls within the foregoing ranges, the additive can enhance the cycle performance of the battery.

In some embodiments, the electrolyte solution includes a first anion, and the first anion may include one or more of bis(fluorosulfonyl)imide anions (FSI⁻), bis(trifluoromethanesulfonyl)imide anions (TFSI⁻), bis(oxalato)borate anions (BOB⁻), difluoro(oxalato)borate anions (DFOB⁻), difluorobis(oxalato)phosphate anions (DFOP⁻), tetrafluoro(oxalato)phosphate anions (TFOP⁻), difluorophosphate anions (PO₂F2¯), hexafluorophosphate anions (PF₆⁻), tetrafluoroborate anions (BF₄⁻), hexafluoroarsenate anions (AsF₆⁻), and trifluoromethanesulfonate anions (CF₃SO₃⁻).

In some embodiments, the first anion may include one or more of bis(fluorosulfonyl)imide anions (FSI⁻), bis(trifluoromethanesulfonyl)imide anions (TFSI⁻), difluoro(oxalato)borate anions (DFOB⁻), and tetrafluoro(oxalato)phosphate anions (TFOP⁻). Optionally, the first anion may include one or more of bis(fluorosulfonyl)imide anions (FSI⁻) and bis(trifluoromethanesulfonyl)imide anions (TFSI⁻). The first anion can decompose on an *anode* surface to form an inorganic fluoride-rich SEI layer, thereby facilitating dense metal deposition and allowing the battery to have longer cycle life. In addition, the first anion further exhibits good oxidative stability, so that the battery can exhibit high cycling stability and long cycle life within a wider voltage range.

In some embodiments, a molar concentration of the first anion in the electrolyte solution may range from 0.5 mol/L to 4 mol/L, optionally, range from to 0.8 mol/L to 2.4 mol/L, or further optionally, range from 1.2 mol/L to 1.8 mol/L. The adjustment of the concentration of the first anion within the foregoing range neither affects the ion transport performance of the electrolyte solution nor compromises the stability of the electrolyte solution with the positive and negative electrodes, thereby allowing the battery to have longer cycle life.

In some embodiments, the electrolyte solution includes a first cation, and the first cation includes one or more of alkali metal ions, and alkaline earth metal ions, optionally, includes one or more of lithium ions, sodium ions, potassium ions, and magnesium ions, and further optionally, is lithium ions.

In some embodiments, an electrolyte solution includes a solvent. The solvent includes a first solvent. The first solvent is one or more of organosiloxane compounds represented by Formula (I), and the content of the first solvent is greater than or equal to 20% of the total weight of the solvent.

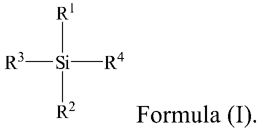

R¹, R², R³, and R⁴ each independently include one of hydrogen atoms, C1-C10 alkyl groups, C1-C10 alkoxy groups, C2-C10 alkoxyalkyl groups, and groups represented by Formula (a), and at least one of R¹, R², R³, and R⁴ includes one of C1-C10 alkoxy groups and the groups represented by Formula (a),

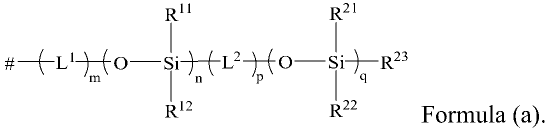

# represents an attachment point, L¹ and L² each independently represent one of C1-C10 alkylene groups, C1-C10 alkyleneoxy groups, and C2-C10 alkyleneoxyalkylene groups, R¹¹, R¹², R²¹, R²², and R²³ each independently include one of hydrogen atoms, C1-C10 alkyl groups, C1-C10 alkoxy groups, and C2-C10 alkoxyalkyl groups, m and p each independently represent 0 or 1, n and q each independently represent 0 or an integer from 1 to 5, and n and q are not both 0. In addition, in the organosiloxane compounds represented by Formula (I), a quantity of silicon atoms in the first solvent is denoted as x, a quantity of oxygen atoms in the first solvent is denoted as y, 0.5 ≤ y/x ≤ 4, 1 ≤ x ≤ 10, and 1 ≤ y ≤ 20, optionally, 1 ≤ y/x ≤ 2, 1 ≤ x ≤ 5, and 1 ≤ y ≤ 10, and further optionally, 1 ≤ y/x ≤ 2, 1 ≤ x ≤ 3, and 1 ≤ y ≤ 6. In this way, the battery can exhibit better cycle performance.

In some embodiments, the electrolyte solution includes a solvent. The solvent includes a first solvent, a second solvent, and a third solvent.

The first solvent is one or more of organosiloxane compounds represented by Formula (I), and the content of the first solvent is greater than or equal to 20% of the total weight of the solvent.

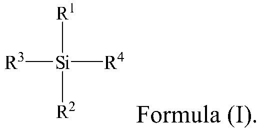

R¹, R², R³, and R⁴ each independently include one of hydrogen atoms, C1-C10 alkyl groups, C1-C10 alkoxy groups, C2-C10 alkoxyalkyl groups, and groups represented by Formula (a), and at least one of R¹, R², R³, and R⁴ includes one of C1-C10 alkoxy groups and the groups represented by Formula (a),

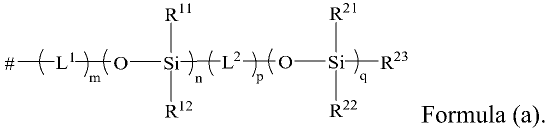

# represents an attachment point, L¹ and L² each independently represent one of C1-C10 alkylene groups, C1-C10 alkyleneoxy groups, and C2-C10 alkyleneoxyalkylene groups, R¹¹, R¹², R²¹, R²², and R²³ each independently include one of hydrogen atoms, C1-C10 alkyl groups, C1-C10 alkoxy groups, and C2-C10 alkoxyalkyl groups, m and p each independently represent 0 or 1, n and q each independently represent 0 or an integer from 1 to 5, and n and q are not both 0. In addition, in the organosiloxane compounds represented by Formula (I), a quantity of silicon atoms in the first solvent is denoted as x, a quantity of oxygen atoms in the first solvent is denoted as y, 0.5 ≤ y/x ≤ 4, 1 ≤ x ≤ 10, and 1 ≤ y ≤ 20, optionally, 1 ≤ y/x ≤ 2, 1 ≤ x ≤ 5, and 1 ≤ y ≤ 10, and further optionally, 1 ≤ y/x ≤ 2, 1 ≤ x ≤ 3, and 1 ≤ y ≤ 6.

The second solvent includes one or more of ester and halogenated ester compounds, ether compounds, and first fluoroether compounds, none of α-carbon atoms directly bonded to an oxygen atom in ether functional groups in molecular structures of the first fluoroether compounds having a fluorine atom directly bonded to the α-carbon atoms. Optionally, the second solvent includes one or more of ether compounds and first fluoroether compounds. The content of the second solvent is less than or equal to 40%, and optionally, ranges from 10% to 30%, of the total weight of the solvent.

The third solvent includes one or more of alkane and halogenated alkane compounds, aromatic hydrocarbon and halogenated aromatic hydrocarbon compounds, and second fluoroether compounds, α-carbon atoms directly bonded to an oxygen atom in ether functional groups in molecular structures of the second fluoroether compounds having at least one fluorine atom directly bonded to the α-carbon atoms. Optionally, the third solvent includes one or more of second fluoroether compounds. The content of the third solvent is less than or equal to 40%, and optionally, ranges from 10% to 30%, of the total weight of the solvent.

In this way, the battery can exhibit better cycle performance.

### [Preparation method]

The preparation method of the electrolyte solution is well-known. For example, an electrolyte salt (composed of the foregoing first anion and first cation), a solvent, and an optional additive may be uniformly mixed to obtain an electrolyte solution. During a preparation process, the order of adding the materials is not particularly limited. The materials may be added simultaneously or in batches.

The components in the electrolyte solution and respective contents thereof may be determined using conventional methods in the art. For example, detection may be performed using methods such as gas chromatography-mass spectrometry (GC-MS), ion chromatography (IC), liquid chromatography (LC), and inductively coupled plasma optical emission spectrometry (ICP-OES).

A battery cell includes a positive electrode plate and a negative electrode plate.

The structure and/or composition of each of the positive electrode plate and the negative electrode plate may be selected based on a type of the battery cell. This is not limited in the embodiments of this application. The battery cell in the embodiments of this application may include metal battery cells, metal-air battery cells, metal-sulfur battery cells, anode-free metal battery cells, and the like. As an example, the battery cell may include a lithium metal battery cell, an anode-free lithium metal battery cell, a lithium-air battery cell, a lithium-sulfur battery cell, a sodium metal battery cell, an anode-free sodium metal battery cell, a sodium-air battery cell, a sodium-sulfur battery cell, a potassium metal battery cell, an anode-free potassium metal battery cell, a potassium-air battery cell, a potassium-sulfur battery cell, a magnesium metal battery cell, an anode-free magnesium metal battery cell, a magnesium-air battery cell, a magnesium-sulfur battery cell, or the like. In some embodiments, the battery cell may include lithium metal battery cells, anode-free lithium metal battery cells, lithium-air battery cells, and lithium-sulfur battery cells.

### [Positive electrode plate]

In some embodiments, the positive electrode plate includes a positive electrode current collector and a positive electrode film layer arranged on at least one surface of the positive electrode current collector, and the positive electrode film layer includes a positive electrode active material. For example, the positive electrode current collector has two opposite surfaces in a thickness direction of the positive electrode current collector, and the positive electrode film layer is arranged on either or both of the two opposite surfaces of the positive electrode current collector.

The type of the positive electrode active material may be selected based on a type of the battery cell. This is not limited in the embodiments of this application.

For example, when the battery cell is a lithium metal battery cell or an anode-free lithium metal battery cell, the positive electrode active material may include, but is not limited to, one or more of lithium transition metal oxide, lithium-containing phosphate, and respective modified compounds thereof. Examples of lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof. In some embodiments, to further improve the energy density of a battery, the positive electrode active material may include one or more of lithium transition metal oxide represented by a general formula LiₐNi_{b}Co_{c}M_{d}OₑA_{f} and modified compounds thereof. 0.8 ≤ a ≤ 1. 2, 0.5 ≤ B < 1, 0 < c < 1, 0 < d < 1, 1 ≤ e ≤ 2, 0 ≤ f ≤ 1, M includes one or more of Mn, Al, Zr, Zn, Cu, Cr, Mg, Fe, V, Ti, and B, and A includes one or more of N, F, S and Cl.

For example, the positive electrode active material may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.5}Co_{0.25}Mn_{0.25}O₂ (NCM211), LiNi_{0.6}Co_{0.2}Mn_{0.2}O₂ (NCM622), LiNi_{0.8}Co_{0.1}Mn_{0.1}O₂ (NCM811), LiNi_{0.96}Co_{0.02}Mn_{0.02}O₂ (Ni96), LiNi_{0.85}Co_{0.15}Al_{0.05}O₂, LiFePO₄, and LiMnPO₄.

When the battery cell is a sodium metal battery cell or an anode-free sodium metal battery cell, the positive electrode active material may include, but is not limited to, one or more of sodium transition metal oxide, a polyanionic material (for example, phosphate, fluorophosphate, pyrophosphate, or sulfate), and a Prussian blue material. For example, the positive electrode active material may include one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material having a general formula XₚM'_{q}(PO₄)ᵣOₓY₃₋ₓ. In a general formula XₚM'_{q}(PO₄)ᵣOₓY₃₋ₓ, 0 < p ≤ 4, 0 < q ≤ 2, 1 ≤ r ≤ 3, 0 ≤ x ≤ 2, X includes one or more of H⁺, Li⁺, Na⁺, K⁺, and NH₄⁺, M' is a transition metal, and optionally, includes one or more of V, Ti, Mn, Fe, Co, Ni, Cu, and Zn, and Y is a halogen atom, and optionally, includes one or more of F, Cl, and Br.

The modified compounds of the positive electrode active materials may be obtained by performing doping modification and/or surface coating modification on the positive electrode active material.

When the battery cell is a lithium-sulfur battery cell or a sodium-sulfur battery cell, the positive electrode active material may include, but is not limited to, one or more of elemental sulfur, a sulfur-carbon composite material, a sulfur-conductive polymer composite material, and a sulfur-metal oxide composite material.

In some embodiments, the positive electrode film layer may further optionally include a positive electrode conductive agent. A type of the positive electrode conductive agent is not particularly limited in this application. For example, the positive electrode conductive agent includes one or more of superconducting carbon, conductive graphite, acetylene black, carbon black, Ketjen black, carbon dots, carbon nanotubes, graphene, and carbon nanofibers.

In some embodiments, the positive electrode film layer may further optionally include a positive electrode binder. A type of the positive electrode binder is not particularly limited in this application. For example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode current collector may use a metal foil or a composite current collector. As an example of the metal foil, an aluminum foil may be used. The composite current collector may include a polymer material base layer and a layer of a metal material formed on at least one surface of the polymer material base layer. For example, the metal material may include one or more of aluminum, aluminum alloy, nickel, nickel alloy, titanium, titanium alloy, silver, and silver alloy. For example, the polymer material base layer may include one or more of polypropylene (PP), polyethylene terephthalate (PET), polybutylene terephthalate (PBT), polystyrene (PS), and polyethylene (PE).

The positive electrode film layer may be usually formed by coating positive electrode slurry on the positive electrode current collector and performing drying and cold pressing. The positive electrode slurry is usually formed by dispersing the positive electrode active material, an optional conductive agent, an optional binder, and any other components in a solvent and performing stirring uniformly. The solvent may be N-methylpyrrolidone (NMP), but is not limited thereto.

### [Negative electrode plate]

In some embodiments, the negative electrode plate may include a negative electrode current collector and a first metal layer arranged on at least one surface of the negative electrode current collector. A metal element in the first metal layer may include one or more of alkali metal elements, alkaline earth metal elements.

In some embodiments, a metal material in the first metal layer may include one or more of lithium, a lithium alloy, sodium, a sodium alloy, potassium, a potassium alloy, magnesium, and a magnesium alloy.

The lithium alloy may be an alloy formed of lithium and another metallic element or non-metallic element. As an example, the another metallic element in the lithium alloy may include one or more elements of tin, zinc, aluminum, magnesium, silver, gold, gallium, indium, and platinum, and the non-metallic element in the lithium alloy may include one or more of boron, carbon, and silicon.

The sodium alloy may be an alloy formed of sodium and another metallic element or non-metallic element. As an example, the another metallic element in the sodium alloy may include one or more elements of tin, zinc, aluminum, magnesium, silver, gold, gallium, indium, and platinum, and the non-metallic element in the sodium alloy may include one or more of boron, carbon, and silicon.

The potassium alloy may be an alloy formed of magnesium and another metallic element or non-metallic element. As an example, the another metallic element in the magnesium alloy may include one or more elements of tin, zinc, aluminum, sodium, lithium, silver, gold, gallium, indium, and platinum, and the non-metallic element in the potassium alloy may include one or more of boron, carbon, and silicon.

The magnesium alloy may be an alloy formed between magnesium and another metallic element or non-metallic element. As an example, the another metallic element in the magnesium alloy may include one or more elements of tin, zinc, aluminum, sodium, lithium, silver, gold, gallium, indium, and platinum, and the non-metallic element in the magnesium alloy may include one or more of boron, carbon, and silicon.

In some embodiments, the negative electrode plate may include the negative electrode current collector and not include the first metal layer to form an anode-free metal battery cell through assembly.

In some embodiments, the negative electrode current collector may include a metal foil, a three-dimensional porous current collector, or a composite current collector. As an example of the metal foil, a copper foil, a copper alloy foil, a nickel foil, or a nickel alloy foil may be used. As an example of the three-dimensional porous current collector, a copper mesh, a nickel mesh, foamed copper, or foamed nickel may be used. The composite current collector may include a polymer material base layer and a layer of a metal material formed on at least one surface of the polymer material base layer. For example, the metal material may include one or more of copper, copper alloy, nickel, nickel alloy, titanium, titanium alloy, silver, and silver alloy. For example, the polymer material base layer may include one or more of polypropylene (PP), polyethylene terephthalate (PET), polybutylene terephthalate (PBT), polystyrene (PS), and polyethylene (PE).

In some embodiments, a conductive coating may be formed on the surface of the negative electrode current collector to facilitate uniform metal deposition. The conductive coating may include conductive carbon. The conductive carbon may include one or more of carbon fibers, carbon nanotubes, graphene, and fullerene.

### [Separator]

The battery cell may further include a separator. The separator may be arranged between the positive electrode plate and the negative electrode plate to mainly play a role in preventing an internal short circuit. The type of the separator is not particularly limited in this application, and any well-known separator with a porous structure having good chemical stability and mechanical stability may be selected.

In some embodiments, the material of the separator may include one or more of glass fiber, non-woven cloth, polyethylene, polypropylene, polyvinylidene fluoride, and polyimide. The separator may be a single layer film or a multilayer composite film. When the separator is a multilayer composite film, materials of the layers are the same or different.

The manufacturing method of the battery cell is well-known. In some embodiments, the positive electrode plate, the separator, the negative electrode plate, and the electrolyte solution may be assembled to form the battery cell. As an example, the positive electrode plate, the separator, and the negative electrode plate may be formed into an electrode assembly via a winding process and/or a stacking process. The electrode assembly is placed in an outer packaging, dried, and injected with the electrolyte solution. Through subsequent procedures such as vacuum sealing, resting, formation, and shaping, the battery cell is obtained. A plurality of battery cells may be connected in series, parallel, or series-parallel to form a battery module. A plurality of battery modules may be connected in series, parallel, or series-parallel to form a battery pack. In some embodiments, the plurality of battery cells may directly form a battery pack.

### Power consuming apparatus

An embodiment of this application further provides a power consuming apparatus. The power consuming apparatus includes one or more of the battery cell, the battery module, or the battery pack provided in the embodiments of this application. The battery cell, the battery module, or the battery pack may be used as a power source of the power consuming apparatus, or may be used as an energy storage unit of the power consuming apparatus. The power consuming apparatus may be, but is not limited to, a mobile device (for example, a mobile phone, a tablet computer, or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

The battery cell, the battery module, or the battery pack may be selected according to use requirements of the power consuming apparatus.

FIG. 6 is a schematic diagram of a power consuming apparatus as an example. The power consuming apparatus may be a pure electric vehicle, a hybrid electric vehicle, a plug-in hybrid electric vehicle, or the like. To meet the requirements of the power consuming apparatus for high power and high energy density, a battery pack or a battery module may be used.

For another example, the power consuming apparatus may be a mobile phone, a tablet computer, a notebook computer, or the like. The power consuming apparatus usually needs to be light and thin, and a battery cell may be used as a power source.

### Examples

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios of the following examples are based on weight, all reagents used in the examples are commercially available or synthesized according to conventional methods and can be directly used without further treatment, and all instruments used in the examples are commercially available.

### Example 1

### (1) Preparation of an electrolyte solution

A first solvent A-6, a second solvent B-5, and a third solvent C-1 were thoroughly mixed at a weight ratio of 60:20:20 to form a solvent. 1.4025 g of lithium bis(fluorosulfonyl)imide was added to 5 mL of the solvent, and the mixture was stirred thoroughly to form a colorless and transparent electrolyte solution with a concentration of 1.5 mol/L.

### (2) Manufacturing of a positive electrode plate

A positive electrode active material NCM811, a conductive agent acetylene black, and a binder PVDF were mixed in a weight ratio of 98:1:1. The mixture was added to a solvent NMP and stirred until a homogeneous system is formed to obtain a positive electrode slurry with a solid content of 70%. The positive electrode slurry was uniformly coated onto both surfaces of a positive electrode current collector aluminum foil. After air-drying, the coated foil was transferred to an oven for further drying. Finally, the dried foil was cut into 40 mm×50 mm rectangular pieces to serve as positive electrode plates for later use. The coating loading is 25 mg/cm².

### (3) Manufacturing of a negative electrode plate

A 50 µm-thick lithium foil was laminated with a 12 µm-thick copper foil through roll pressing. The composite was then cut into 41 mm×51 mm rectangular pieces to serve as negative electrode plates for later use.

### (4) Manufacturing of a separator

A polyethylene porous membrane was cut into 45 mm × 55 mm rectangular pieces to serve as separators for later use.

### (5) Manufacturing of a battery

One cut positive electrode plate was stacked with two cut negative electrode plates, and the positive electrode plate and the negative electrode plates were separated by separators to form an electrode assembly. The electrode assembly was placed in an aluminum-laminated film pouch, followed by injection of 0.30 g of the prepared electrolyte solution, a battery is obtained after procedures such as vacuum hot-press sealing and resting (at least 6 hours). The battery has a rated capacity of 140 mAh.

### Cycle life test

At 25°C, the manufactured battery was charged at a constant current of 0.2C (28 mA) to 4.5 V, followed by constant voltage charging until the current dropped to 0.1C (14 mA). At this point, the battery is fully charged, and the charging capacity at this point was recorded as the 1st-cycle charge capacity. After resting for 5 minutes, the battery was discharged at a constant current of 1C (140 mA) to 2.8 V, completing one charge-discharge cycle. The discharge capacity at this point was recorded as the 1st-cycle discharge capacity. The battery was subjected to a cyclic charge-discharge test according to the foregoing method, and the discharge capacity after each cycle was recorded until the discharge capacity of the battery decayed to 80% of the 1st-cycle discharge capacity, and a quantity of cycles at this point was used to characterize the cycle life of the battery.

### Example 2-45

Manufacturing methods and test methods of the batteries are similar to those in Embodiment 1, and differences lie in difference compositions of the electrolyte solution. For details, refer to Table 1.

C-1 represents 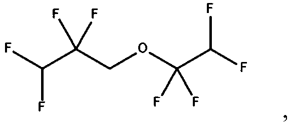 and C-2 represents

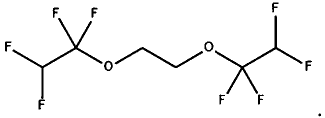

The content of the first solvent, the content of the second solvent, and the content of the third solvent are based on the total weight of the solvent.

PS represents propane sultone, DTD represents ethylene sulfate, and TMSP represents tris(trimethylsilyl) phosphate.

The content of an additive is based on a total weight of an electrolyte solution.

### Comparative example 1

A manufacturing method and a test method of the battery are similar to those in Embodiment 1, and differences lie in difference compositions of the electrolyte solution.

A first solvent B-5 and a second solvent C-1 were thoroughly mixed at a weight ratio of 50:50 to form a solvent. 1.4025 g of lithium bis(fluorosulfonyl)imide was added to 5 mL of the solvent, and the mixture was stirred thoroughly to form a colorless and transparent electrolyte solution with a concentration of 1.5 mol/L.

### Comparative example 2

A manufacturing method and a test method of the battery are similar to those in Embodiment 1, and differences lie in difference compositions of the electrolyte solution.

A first solvent A-6, a second solvent B-5, and a third solvent C-1 were thoroughly mixed at a weight ratio of 2:49:49 to form a solvent. 1.4025 g of lithium bis(fluorosulfonyl)imide was added to 5 mL of the solvent, and the mixture was stirred thoroughly to form a colorless and transparent electrolyte solution with a concentration of 1.5 mol/L.

### Comparative example 3

1.4025 g of lithium bis(fluorosulfonyl)imide was added to 5 mL of 1,2-dimethoxyethane, and the mixture was stirred thoroughly to form a colorless and transparent electrolyte solution with a concentration of 1.5 mol/L.

### Comparative example 4

Ethylene carbonate and ethyl methyl carbonate were thoroughly mixed at a weight ratio of 30:70 to form a solvent. 0.76 g of lithium hexafluorophosphate was added to 5 mL of the solvent, and the mixture was stirred thoroughly to form a colorless and transparent electrolyte solution with a concentration of 1.0 mol/L.

**Table 1**

| No. | Solvent | | | | | | Additive | | **Lithium** salt | | Cycle life (cycles) |
|---|---|---|---|---|---|---|---|---|---|---|---|
| | First solvent | | Second solvent | | Third solvent | | | | | | |
| | Type | Weight content | Type | Weight content | Type | Weight content | Type | Weight content | Type | Concentration (mol/L) | |
| Example 1 | A-6 | 60% | B-5 | 20% | C-1 | 20% | - | - | LiFSI | 1.5 | 679 |
| Example 2 | A-6 | 40% | B-5 | 30% | C-1 | 30% | - | - | LiFSI | 1.5 | 589 |
| Example 3 | A-6 | 80% | B-5 | 10% | C-1 | 10% | - | - | LiFSI | 1.5 | 583 |
| Example 4 | A-6 | 20% | B-5 | 40% | C-1 | 40% | - | - | LiFSI | 1.5 | 478 |
| Example 5 | A-6 | 100% | - | - | - | - | - | - | LiFSI | 1.5 | 465 |
| Example 6 | A-6 | 80% | B-5 | 20% | - | - | - | - | LiFSI | 1.5 | 551 |
| Example 7 | A-6 | 80% | - | - | C-1 | 20% | - | - | LiFSI | 1.5 | 547 |
| Example 8 | A-6 | 60% | B-5 | 20% | C-1 | 20% | - | - | LiFSI | 0.5 | 444 |
| Example 9 | A-6 | 60% | B-5 | 20% | C-1 | 20% | - | - | LiFSI | 0.8 | 519 |
| Example 10 | A-6 | 60% | B-5 | 20% | C-1 | 20% | - | - | LiFSI | 1.2 | 602 |
| Example 11 | A-6 | 60% | B-5 | 20% | C-1 | 20% | - | - | LiFSI | 1.8 | 611 |
| Example 12 | A-6 | 60% | B-5 | 20% | C-1 | 20% | - | - | LiFSI | 2.4 | 526 |
| Example 13 | A-6 | 60% | B-5 | 20% | C-1 | 20% | - | - | LiFSI | 4 | 467 |
| Example 14 | A-2 | 60% | B-5 | 20% | C-1 | 20% | - | - | LiFSI | 1.5 | 675 |
| Example 15 | A-7 | 60% | B-5 | 20% | C-1 | 20% | - | - | LiFSI | 1.5 | 668 |
| Example 16 | A-1 | 60% | B-5 | 20% | C-1 | 20% | - | - | LiFSI | 1.5 | 672 |
| Example 17 | A-3 | 60% | B-5 | 20% | C-1 | 20% | - | - | LiFSI | 1.5 | 587 |
| Example 18 | A-4 | 60% | B-5 | 20% | C-1 | 20% | - | - | LiFSI | 1.5 | 481 |
| Example 19 | A-5 | 60% | B-5 | 20% | C-1 | 20% | - | - | LiFSI | 1.5 | 659 |
| Example 20 | A-8 | 60% | B-5 | 20% | C-1 | 20% | - | - | LiFSI | 1.5 | 489 |
| Example 21 | A-9 | 60% | B-5 | 20% | C-1 | 20% | - | - | LiFSI | 1.5 | 476 |
| Example 22 | A-10 | 60% | B-5 | 20% | C-1 | 20% | - | - | LiFSI | 1.5 | 455 |
| Example 23 | A-11 | 60% | B-5 | 20% | C-1 | 20% | - | - | LiFSI | 1.5 | 652 |
| Example 24 | A-12 | 60% | B-5 | 20% | C-1 | 20% | - | - | LiFSI | 1.5 | 468 |
| Example 25 | A-6 | 60% | Dimethoxypropane | 20% | C-1 | 20% | - | - | LiPF₆ | 1.5 | 663 |
| Example 26 | A-6 | 60% | Diethoxyethane | 20% | C-1 | 20% | - | - | LiFSI | 1.5 | 651 |
| Example 27 | A-6 | 60% | B-2 | 20% | C-1 | 20% | - | - | LiFSI | 1.5 | 667 |
| Example 28 | A-6 | 60% | 1,2-dimethoxyethane | 20% | C-1 | 20% | - | - | LiFSI | 1.5 | 567 |
| Example 29 | A-6 | 60% | Ethyl methyl carbonate | 20% | C-1 | 20% | - | - | LiFSI | 1.5 | 551 |
| Example 30 | A-6 | 60% | B-23 | 20% | C-1 | 20% | - | - | LiFSI | 1.5 | 478 |
| Example 31 | A-6 | 60% | B-31 | 20% | C-1 | 20% | - | - | LiFSI | 1.5 | 461 |
| Example 32 | A-6 | 60% | B-5 | 20% | C-2 | 20% | - | - | LiFSI | 1.5 | 669 |
| Example 33 | A-6 | 60% | B-5 | 20% | Fluorobenzene | 20% | - | - | LiFSI | 1.5 | 450 |
| Example 34 | A-6 | 60% | B-5 | 20% | Decafluoropentane | 20% | - | - | LiFSI | 1.5 | 489 |
| Example 35 | A-6 | 60% | B-5 | 20% | C-1 | 20% | - | - | LiPF₆ | 1.5 | 491 |
| Example 36 | A-6 | 60% | B-5 | 20% | C-1 | 20% | - | - | LiDFOB | 1.5 | 533 |
| Example 37 | A-6 | 60% | B-5 | 20% | C-1 | 20% | PS | 0.5% | LiFSI | 1.5 | 680 |
| Example 38 | A-6 | 60% | B-5 | 20% | C-1 | 20% | PS | 1% | LiFSI | 1.5 | 682 |
| Example 39 | A-6 | 60% | B-5 | 20% | C-1 | 20% | PS | 3% | LiFSI | 1.5 | 681 |
| Example 40 | A-6 | 60% | B-5 | 20% | C-1 | 20% | PS | 5% | LiFSI | 1.5 | 679 |
| Example 41 | A-6 | 60% | B-5 | 20% | C-1 | 20% | DTD | 1% | LiFSI | 1.5 | 680 |
| Example 42 | A-6 | 60% | B-5 | 20% | C-1 | 20% | TMSP | 1% | LiFSI | 1.5 | 680 |
| Example 43 | A-6 | 100% | - | - | - | - | PS | 0.5% | LiFSI | 1.5 | 471 |
| Example 44 | A-6 | 80% | B-5 | 20% | - | - | PS | 0.5% | LiFSI | 1.5 | 559 |
| Example 45 | A-6 | 80% | - | - | C-1 | 20% | PS | 0.5% | LiFSI | 1.5 | 553 |
| Comparative example 1 | - | - | B-5 | 50% | C-1 | 50% | - | - | LiFSI | 1.5 | 419 |
| Comparative example 2 | A-6 | 2% | B-5 | 49% | C-1 | 49% | - | - | LiFSI | 1.5 | 422 |
| Comparative example 3 | 1,2-dimethoxyethane | | | | | | - | - | LiFSI | 1.5 | 21 |
| Comparative example 4 | 30% ethylene carbonate+70% ethyl methyl carbonate | | | | | | - | - | LiPF₆ | 1.0 | 45 |

The combined test results of Examples 1 to 45 and Comparative examples 1 to 4 demonstrate that the use of the first solvent as a main solvent can enhance the cycle performance of the battery.

The combined test results of Examples 1 to 4 demonstrate the adjustment of the weight content of the first solvent, second solvent, and third solvent can better achieve the effects of the components, and can further enhance the cycle performance of the battery.

The combined test results of Examples 1 and 5 to 7 demonstrate that when the solvent includes all of the first solvent, the second solvent, and the third solvent, the cycle performance of the battery can be further enhanced.

The combined test results of Examples 1 and 8 to 13 further demonstrate that the adjustment of the concentration of the electrolyte solution can further enhance the cycle performance of the battery.

The combined test results of Examples 1 and 14 to 24 demonstrate that when the first solvent includes A-1, A-2, A-5, A-6, A-7, and A-11, the cycle performance of the battery can be further enhanced.

The combined test results of Example 1 and 25 to 31 demonstrate that when the second solvent includes dimethoxypropane, diethoxyethane, B-2, and B-5, the cycle performance of the battery can be further enhanced.

The combined test results of Examples 1 and 32 to 34 demonstrate that when the third solvent includes C-1 and C-2, the cycle performance of the battery can be further enhanced.

The combined test results of Examples 1 and 35 and 36 demonstrate that when the electrolyte salt is lithium bis(fluorosulfonyl)imide (LiFSI), the cycle performance of the battery can be further enhanced.

The combined test results of Examples 1 and 37 to 45 demonstrate that when the electrolyte solution further includes a small amount of film-forming additives, the cycle performance of the battery is enhanced.

It should be noted that this application is not limited to the above-mentioned embodiments. The foregoing embodiments are exemplary only, and any embodiment within the scope of the technical solution of this application that has substantially the same composition and has the same effects as the technical idea is encompassed in the technical scope of this application. In addition, without departing from the scope of the gist of this application, various modifications that can be conceived by those skilled in the art and applied to the embodiments, and other modes constructed by combining some of the components in the embodiments are also encompassed in the scope of this application.

## Claims

1. An electrolyte solution, comprising a solvent, wherein the solvent comprises a first solvent, the first solvent is an organosiloxane compound, and the content of the first solvent is greater than or equal to 20% of the total weight of the solvent.

2. The electrolyte solution according to claim 1, wherein the first solvent comprises one or more of organosiloxane compounds represented by Formula (I), 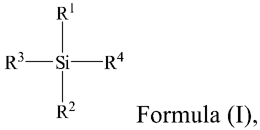 wherein
R¹, R², R³, and R⁴ each independently comprise one of hydrogen atoms, C1-C10 alkyl groups, C1-C10 alkoxy groups, C2-C10 alkoxyalkyl groups, and groups represented by Formula (a), and at least one of R¹, R², R³, and R⁴ comprises one of C1-C10 alkoxy groups and the groups represented by Formula (a), 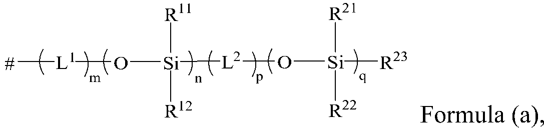 wherein
# represents an attachment point, L¹ and L² each independently represent one of C1-C10 alkylene groups, C1-C10 alkyleneoxy groups, and C2-C10 alkyleneoxyalkylene groups, R¹¹, R¹², R²¹, R²², and R²³ each independently comprise one of hydrogen atoms, C1-C10 alkyl groups, C1-C10 alkoxy groups, and C2-C10 alkoxyalkyl groups, m and p each independently represent 0 or 1, n and q each independently represent 0 or an integer from 1 to 5, and n and q are not both 0.

3. The electrolyte solution according to claim 2, wherein the first solvent meets at least one of the following conditions (1) to (13):
(1) R¹, R², R³, and R⁴ each independently comprise one of C1-C5 alkyl groups, C1-C5 alkoxy groups, C2-C5 alkoxyalkyl groups, and the groups represented by Formula (a);
(2) two of R¹, R², R³, and R⁴ each independently comprise one of C1-C10 alkoxy groups and the groups represented by Formula (a);
(3) two of R¹, R², R³, and R⁴ each independently comprise one of C1-C5 alkoxy groups and the groups represented by Formula (a);
(4) L¹ and L² each independently represent one of C1-C5 alkylene groups, C1-C5 alkyleneoxy groups, and C2-C5 alkyleneoxyalkylene groups;
(5) L¹ and L² each independently represent one of C2-C3 alkyleneoxy groups;
(6) R¹¹, R¹², R²¹, R²², and R²³ each independently comprise one of C1-C5 alkyl groups, C1-C5 alkoxy groups, and C2-C5 alkoxyalkyl groups;
(7) R¹¹, R¹², R²¹, and R²² are each independently C1-C5 alkyl groups, and R²³ comprises one of C1-C5 alkyl groups, C1-C5 alkoxy groups, and C2-C5 alkoxyalkyl groups;
(8) m and p are not both 0;
(9) n and q each independently represent 0, 1, or 2, and n and q are not both 0;
(10) m, n, and p are all 0, and q is an integer from 1 to 5;
(11) m and n are both 0, p is 1, and q is an integer from 1 to 5;
(12) m is 0, n is an integer from 1 to 5, p is 1, and q is an integer from 1 to 5; and
(13) m is 1, n is an integer from 1 to 5, p is 1, and q is an integer from 1 to 5.

4. The electrolyte solution according to claim 2 or 3, wherein the groups represented by Formula (a) meet at least one of the following conditions (1) to (15):
(1) m, n, and p are all 0, q is 1 or 2, R²¹, R²², and R²³ each independently comprise one of C1-C10 alkyl groups, C1-C10 alkoxy groups, and C2-C10 alkoxyalkyl groups;
(2) m, n, and p are all 0, q is 1 or 2, R²¹, R²², and R²³ each independently comprise one of C1-C5 alkyl groups, C1-C5 alkoxy groups, and C2-C5 alkoxyalkyl groups;
(3) m, n, and p are all 0, q is 1 or 2, R²¹ and R²² are each independently C1-C5 alkyl groups, R²³ is C1-C5 alkyl groups, C1-C5 alkoxy groups, and C2-C5 alkoxyalkyl groups;
(4) m and n are both 0, p is 1, q is 1 or 2, L² represents one of C1-C10 alkylene groups, C1-C10 alkyleneoxy groups, and C2-C10 alkyleneoxyalkylene groups, and R²¹, R²², and R²³ each independently comprise one of C1-C10 alkyl groups, C1-C10 alkoxy groups, and C2-C10 alkoxyalkyl groups;
(5) m and n are both 0, p is 1, q is 1 or 2, L² represents one of C1-C5 alkylene groups, C1-C5 alkyleneoxy groups, and C2-C5 alkyleneoxyalkylene groups, and R²¹, R²², and R²³ each independently comprise one of C1-C5 alkyl groups, C1-C5 alkoxy groups, and C2-C5 alkoxyalkyl groups;
(6) m and n are both 0, p is 1, q is 1 or 2, L² represents one of C1-C5 alkylene groups, C1-C5 alkyleneoxy groups, and C2-C5 alkyleneoxyalkylene groups, R²¹ and R²² are each independently C1-C5 alkyl groups, and R²³ comprises one of C1-C5 alkyl groups, C1-C5 alkoxy groups, and C2-C5 alkoxyalkyl groups;
(7) m and n are both 0, p is 1, q is 1 or 2, L² represents C2-C3 alkyleneoxy groups, R²¹ and R²² are each independently C1-C5 alkyl groups, and R²³ comprises one of C1-C5 alkyl groups, C1-C5 alkoxy groups, and C2-C5 alkoxyalkyl groups;
(8) m is 0, n is 1 or 2, p is 1, q is 1 or 2, L² represents one of C1-C10 alkylene groups, C1-C10 alkyleneoxy groups, and C2-C10 alkyleneoxyalkylene groups, and R¹¹, R¹², R²¹, R²², and R²³ each independently comprise one of C1-C10 alkyl groups, C1-C10 alkoxy groups, and C2-C10 alkoxyalkyl groups;
(9) m is 0, n is 1 or 2, p is 1, q is 1 or 2, L² represents one of C1-C5 alkylene groups, C1-C5 alkyleneoxy groups, and C2-C5 alkyleneoxyalkylene groups, and R¹¹, R¹², R²¹, R²², and R²³ each independently comprise one of C1-C5 alkyl groups, C1-C5 alkoxy groups, and C2-C5 alkoxyalkyl groups;
(10) m is 0, n is 1 or 2, p is 1, q is 1 or 2, L² represents one of C1-C5 alkylene groups, C1-C5 alkyleneoxy groups, and C2-C5 alkyleneoxyalkylene groups, R¹¹, R¹², R²¹, and R²² are each independently C1-C5 alkyl groups, and R²³ comprises one of C1-C5 alkyl groups, C1-C5 alkoxy groups, and C2-C5 alkoxyalkyl groups;
(11) m is 0, n is 1 or 2, p is 1, q is 1 or 2, L² represents C2-C3 alkyleneoxy groups, R¹¹, R¹², R²¹, and R²² are each independently C1-C5 alkyl groups, and R²³ comprises one of C1-C5 alkyl groups, C1-C5 alkoxy groups, and C2-C5 alkoxyalkyl groups;
(12) m is 1, n is 1 or 2, p is 1, q is 1 or 2, L¹ and L² each independently represent one of C1-C10 alkylene groups, C1-C10 alkyleneoxy groups, and C2-C10 alkyleneoxyalkylene groups, and R¹¹, R¹², R²¹, R²², and R²³ each independently comprise one of C1-C10 alkyl groups, C1-C10 alkoxy groups, and C2-C10 alkoxyalkyl groups;
(13) m is 1, n is 1 or 2, p is 1, q is 1 or 2, L¹ and L² each independently represent one of C1-C5 alkylene groups, C1-C5 alkyleneoxy groups, and C2-C5 alkyleneoxyalkylene groups, and R¹¹, R¹², R²¹, R²², and R²³ each independently comprise one of C1-C5 alkyl groups, C1-C5 alkoxy groups, and C2-C5 alkoxyalkyl groups;
(14) m is 1, n is 1 or 2, p is 1, q is 1 or 2, L¹ and L² each independently represent one of C1-C5 alkylene groups, C1-C5 alkyleneoxy groups, and C2-C5 alkyleneoxyalkylene groups, and R¹¹, R¹², R²¹, and R²² are each independently C1-C5 alkyl groups, and R²³ comprises one of C1-C5 alkyl groups, C1-C5 alkoxy groups, and C2-C5 alkoxyalkyl groups; and
(15) m is 1, n is 1 or 2, p is 1, q is 1 or 2, L¹ and L² each independently represent C2-C3 alkyleneoxy groups, R¹¹, R¹², R²¹, and R²² are each independently C1-C5 alkyl groups, and R²³ comprises one of C1-C5 alkyl groups, C1-C5 alkoxy groups, and C2-C5 alkoxyalkyl groups.

5. The electrolyte solution according to any one of claims 1 to 4, wherein a quantity of silicon atoms in the first solvent is denoted as x, a quantity of oxygen atoms in the first solvent is denoted as y, the first solvent meets at least one of the following conditions (1) to (3):
(1) 0.5 ≤ y/x ≤ 4, and optionally, 1 ≤ y/x ≤ 2;
(2) 1 ≤ x ≤ 10, optionally, 1 ≤ x ≤ 5, and further optionally, 1 ≤ x ≤ 3; and
(3) 1 ≤ y ≤ 20, optionally, 1 ≤ y ≤ 10, and further optionally, 1 ≤ y ≤ 6.

6. The electrolyte solution according to any one of claims 1 to 5, wherein the first solvent comprises one or more of organosiloxane compounds shown as follows: 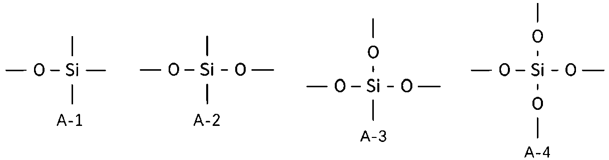 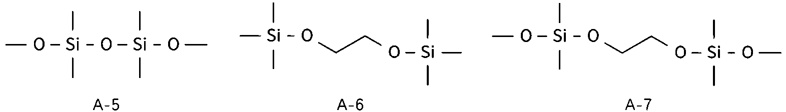 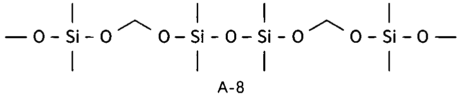 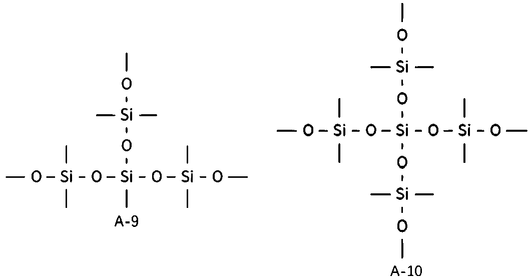 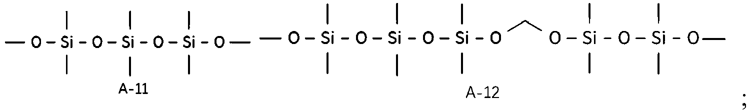 and
optionally, the first solvent comprises one or more of organosiloxane compounds shown in A-1, A-2, A-5, A-6, A-7, and A-11.

7. The electrolyte solution according to any one of claims 1 to 6, wherein the content of the first solvent ranges from 40% to 80%, and optionally, ranges from 50% to 70% of the total weight of the solvent.

8. The electrolyte solution according to any one of claims 1 to 6, wherein the content of the first solvent is 100% of the total weight of the solvent.

9. The electrolyte solution according to any one of claims 1 to 7, wherein the solvent further comprises a second solvent and/or a third solvent, and optionally, the solvent further comprises both a second solvent and a third solvent;
the second solvent comprises one or more of ester and halogenated ester compounds, ether compounds, and first fluoroether compounds, none of α-carbon atoms directly bonded to an oxygen atom in ether functional groups in molecular structures of the first fluoroether compounds having a fluorine atom directly bonded to the α-carbon atoms, and optionally, comprises one or more of ether compounds and first fluoroether compounds; and
the third solvent comprises one or more of alkane and halogenated alkane compounds, aromatic hydrocarbon and halogenated aromatic hydrocarbon compounds, and second fluoroether compounds, α-carbon atoms directly bonded to an oxygen atom in ether functional groups in molecular structures of the second fluoroether compounds having at least one fluorine atom directly bonded to the α-carbon atoms, and optionally, comprises one or more of second fluoroether compounds.

10. The electrolyte solution according to claim 9, wherein
the ester and halogenated ester compounds comprise one or more of carbonate and halogenated carbonate compounds and carboxylic acid ester and halogenated carboxylic acid ester compounds, and optionally, comprise one or more of dimethyl carbonate, diethyl carbonate, ethyl methyl carbonate, ethylene carbonate, vinylene carbonate, propylene carbonate, fluoroethylene carbonate, difluoroethylene carbonate, methyl trifluoroethyl carbonate, ethyl trifluoroethyl carbonate, bis(2,2,2-trifluoroethyl) carbonate, methyl formate, ethyl formate, propyl formate, methyl acetate, ethyl acetate, propyl acetate, methyl propionate, ethyl propionate, propyl propionate, methyl 2,2,2-trifluoroacetate, and ethyl 2,2,2-trifluoroacetate; and/or
the ether compounds comprise one or more of dimethyl ether, diethyl ether, dipropyl ether, dibutyl ether, methyl ethyl ether, methyl propyl ether, methyl butyl ether, ethyl propyl ether, ethyl butyl ether, propyl butyl ether, dimethoxymethane, diethoxymethane, dipropoxymethane, 1,2-dimethoxyethane, dimethoxypropane, diethoxyethane, ethylene glycol methyl ethyl ether, diethylene glycol dimethyl ether, triethylene glycol dimethyl ether, tetraethylene glycol dimethyl ether, tetrahydrofuran, tetrahydropyran, 1,3-dioxolane, 1,3-dioxane, and 1,4-dioxane, and optionally, comprise one or more of dimethoxypropane and diethoxyethane; and/or
the first fluoroether compounds comprise one or more of the following compounds: 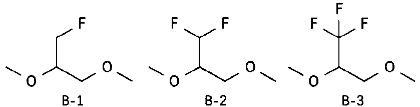 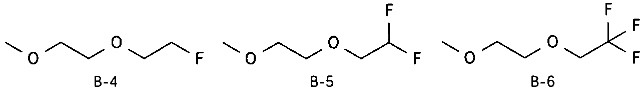 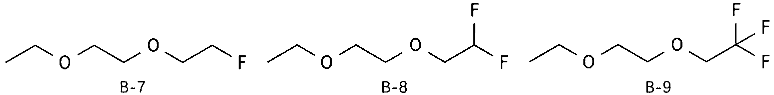 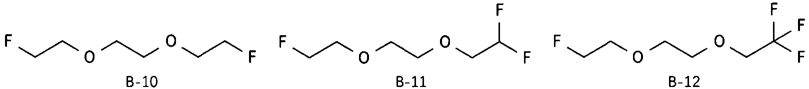 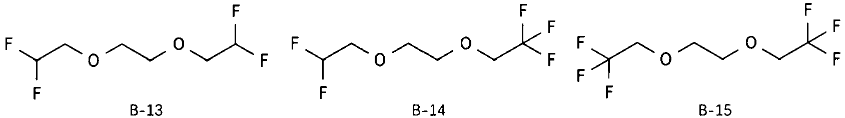 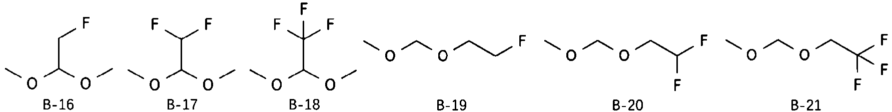 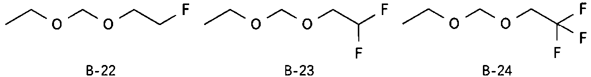 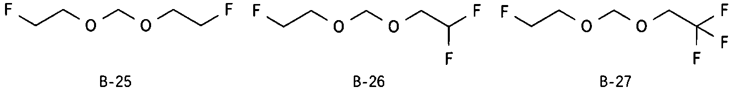 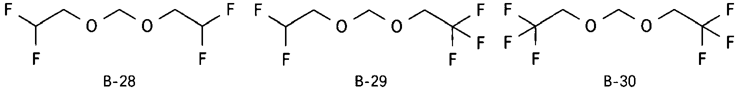 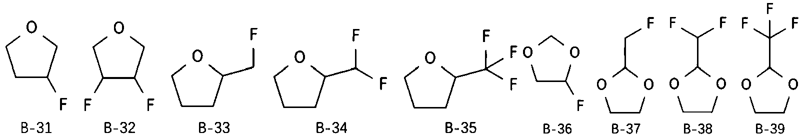 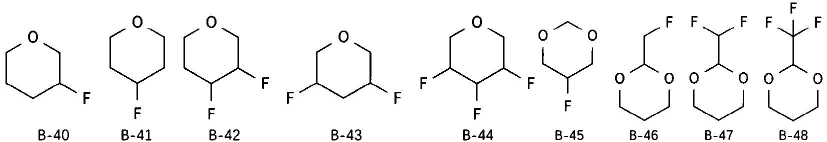 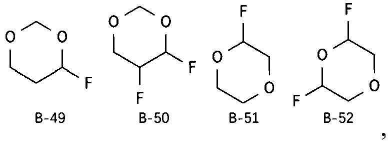 and optionally, comprise one or more of B-2 and B-5; and/or
the alkane and halogenated alkane compounds comprise one or more of cyclohexane and decafluoropentane; and/or
the aromatic hydrocarbon and halogenated aromatic hydrocarbon compounds comprise one or more of benzene, toluene, p-xylene, m-xylene, o-xylene, fluorobenzene, 1,4-difluorobenzene, 1,3-difluorobenzene, 1,2-difluorobenzene, trifluoromethylbenzene, trifluoromethoxybenzene; and/or
the second fluoroether compounds comprise one or more of 1,1,2,2-tetrafluoroethyl-2,2,3,3-tetrafluoropropyl ether, 1,2-bis(1,1,2,2-tetrafluoroethoxy)ethane, bis(2,2,2-trifluoroethyl) ether, 1,1,2,3,3,3-hexafluoropropyl ethyl ether, 1H,1H,5H-octafluoropentyl-1,1,2,2-tetrafluoroethyl ether, ethyl trifluoromethyl ether, difluoromethyl-2,2,3,3,3-pentafluoropropyl ether, heptafluoropropyl-1,2,2,2-tetrafluoroethyl ether, difluoromethyl-2,2,3,3-tetrafluoropropyl ether, perfluoroisopropyl methyl ether, 1,1,2,2-tetrafluoroethyl-2,2,2-trifluoroethyl ether, ethyl-1,1,2,2-tetrafluoroethyl ether, ethyl-2,2,2-tetrafluoroethyl ether, and bis(1,1,2,2-tetrafluoroethyl) ether, and optionally, comprise one or more of 1,1,2,2-tetrafluoroethyl-2,2,3,3-tetrafluoropropyl ether and 1,2-bis(1,1,2,2-tetrafluoroethoxy)ethane.

11. The electrolyte solution according to claim 10, wherein
the second solvent comprise one or more of dimethoxypropane, diethoxyethane, B-2, and B-5; and/or
the third solvent comprises one or more of 1,1,2,2-tetrafluoroethyl-2,2,3,3-tetrafluoropropyl ether, and 1,2-bis(1,1,2,2-tetrafluoroethoxy)ethane.

12. The electrolyte solution according to any one of claims 9 to 11, wherein
the content of the second solvent is less than or equal to 40%, and optionally, ranges from 10% to 30%, of the total weight of the solvent; and/or
the content of the third solvent is less than or equal to 40%, and optionally, ranges from 10% to 30%, of the total weight of the solvent.

13. The electrolyte solution according to any one of claims 1 to 12, wherein the electrolyte solution further comprises an additive, and the additive comprises one or more of propane sultone, ethylene sulfate, ethylene sulfite, tris(trimethylsilyl) phosphate, tris(trimethylsilyl) phosphite, tris(trifluoroethyl) phosphate, tris(trifluoroethyl) phosphite, tris(trimethylsilyl) borate, dimethyl maleic anhydride, and 1,4-butylene diisocyanate; and
optionally, the content of the additive is less than or equal to 5%, and optionally, ranges from 0.5% to 3%, of the total weight of the electrolyte solution.

14. The electrolyte solution according to any one of claims 1 to 13, wherein the electrolyte solution comprises a first anion, and the first anion comprises one or more of bis(fluorosulfonyl)imide anions, bis(trifluoromethanesulfonyl)imide anions, bis(oxalato)borate anions, difluoro(oxalato)borate anions, difluorobis(oxalato)phosphate anions, tetrafluoro(oxalato)phosphate anions, difluorophosphate anions, hexafluorophosphate anions, tetrafluoroborate anions, hexafluoroarsenate anions, and trifluoromethanesulfonate anions;
optionally, the first anion comprises one or more of bis(fluorosulfonyl)imide anions and bis(trifluoromethanesulfonyl)imide anions; and/or
optionally, a molar concentration of the first anion in the electrolyte solution ranges from 0.5 mol/L to 4 mol/L, optionally, ranges from to 0.8 mol/L to 2.4 mol/L, or further optionally, ranges from 1.2 mol/L to 1.8 mol/L.

15. The electrolyte solution according to any one of claims 1 to 14, wherein the electrolyte solution comprises a first cation, and the first cation comprises one or more of alkali metal ions, and alkaline earth metal ions, optionally, comprises one or more of lithium ions, sodium ions, potassium ions, and magnesium ions, and further optionally, is lithium ions.

16. A battery cell (5), comprising the electrolyte solution according to any one of claims 1 to 15.

17. The battery cell (5) according to claim 16, wherein the battery cell (5) comprises metal battery cells, metal-air battery cells, metal-sulfur battery cells, and anode-free metal battery cells, and optionally, lithium metal battery cells, anode-free lithium metal battery cells, lithium-air battery cells, and lithium-sulfur battery cells.

18. A battery, comprising the battery cell (5) according to claim 16 or 17.

19. A power consuming apparatus, comprising the battery according to claim 18.
